# EUROPÄISCHE PATENTANMELDUNG

(11) **EP 4 238 425 A1**
(43) Veröffentlichungstag der Anmeldung: **06.09.2023**
(21) Anmeldenummer: 22020091.9
(22) Anmeldetag: 04.03.2022
(51) Int. Cl.: A23L 15/00, A23L 29/212, A23L 33/185

(54) **EI-ERSATZPRODUKT, VERFAHREN ZUR HERSTELLUNG EINES DERARTIGEN EI-ERSATZPRODUKTES UND VERWENDUNG EINES SOLCHEN EI-ERSATZPRODUKTES**

(71) Anmelder: Silvan Leibacher, 8006 Zürich (CH)
(72) Erfinder: Leibacher, Silvan, 8006 Zürich (CH); Denkel, Christoph, 8057 Zürich (CH)
(74) Vertreter: Beyer, Rudi

(57) **Zusammenfassung**

Die Erfindung betrifft ein Ei-Ersatzprodukt für Hühnervollei, Hühnereiklar oder Hühnereigelb und besteht aus einer verzehrbaren Mischung der Proteine oder einer Fraktion der Proteine aus einer oder mehreren Nicht-Leguminosen, bevorzugt Knollen oder Wurzeln, und mindestens einer wässrig extrahierbaren Fraktion aus mindestens einem pflanzlichen Rohstoff, bevorzugt aus Leguminosen, Getreiden, Süßgräsern, Pseudo-Getreiden, Hanfgewächsen, Nüssen, Speisepilzen. Außerdem betrifft die Erfindung eine Verfahrensweise zur Herstellung eines derartigen Ei-Ersatzprodukts und die Verwendung solcher Ei-Ersatzprodukte.

## Beschreibung

### Gattung

Die Erfindung betrifft ein Ei-Ersatzprodukt.

Des Weiteren betrifft die Erfindung ein Verfahren zum Herstellen eines derartigen Ei-Ersatzproduktes.

Weiterhin betrifft die Erfindung die Verwendung derartiger Ei-Ersatzprodukte.

### Stand der Technik

Weltweit sind Eier eines der am häufigsten konsumierten Lebensmittel und ein unverzichtbares Produkt in der Lebensmittelindustrie.

Eier sind wichtige Zutaten für eine Vielzahl von kulinarischen Anwendungen, darunter herzhaftes und süßes Backen und Kochen. Eier sind nützlich in der häuslichen Küche, der Gastronomie und der Lebensmittelindustrie. Sie bieten eine breite Palette wichtiger Funktionalitäten (kulinarische und technofunktionelle Eigenschaften) und werden zum Beispiel als Triebmittel, zur Bindung (Verdickung), als Schaumbildner, zur Gelierung (Gerinnung), zur Wasserbindung und zur Emulgierung eingesetzt. So sind Eier in den verschiedenen Bereichen und Produktgruppen der Lebensmittelindustrie anzutreffen und werden für unzählige Produkte als Zutat oder funktioneller Zusatzstoff oder Inhaltsstoff verwendet. Beispiele dafür sind Desserts und Backprodukte für Bäckereien, Konditoreien und Confiserien, Saucen und Dressings, Kochprodukte wie Teig- und Kartoffelzubereitungen, Convenience-Produkte oder Snacks, um nur einige davon zu nennen.

Eier sind zudem eine Quelle von Eiweiß, Vitaminen, Eisen und anderen Nährstoffen. Durch die Verwendung von Eiern in Konsumgütern kann oft der Zucker- und/oder Fettgehalt reduziert und der Proteingehalt erhöht werden, ohne die organoleptischen Eigenschaften zu verändern.

Eier werfen allerdings in Bezug auf Umwelt, Ethik, Nutztier- oder human-gesundheitliche Auswirkungen immer mehr Fragen auf, und zwar:
- Im Bereich Umwelt, zum Beispiel oft in Bezug auf problematischen Futtermittelanbau, dessen Herkunft und Beschaffung (Soja), lange Transportwege, tiefer Lebensmittel-Konversionseffizienz von Masttieren und dem damit verbundenen hohen Wasserverbrauch und CO2-Ausstoß,
- im Bereich Ethik, zum Beispiel zu den Lebensbedingungen der Legehennen, der kurzen Lebensdauer von Legehennen (Tötung bei sinkender Legeleistung), die Tötung männlicher Küken, die für diese Industrie keine kommerzielle Relevanz haben, und die dafür verwendeten Methoden;
- im Nutztier- oder human-gesundheitlichen Bereich, zum Beispiel im Hinblick auf Problematiken durch Fipronil, Salmonellen oder der Gefahr von Infektionsübertragungen von Tieren auf Menschen bei größeren Ausbrüchen von Krankheiten (zum Beispiel H1 N5).

Aus einigen oder allen diesen Gründen sind Verbraucherinnen - insbesondere Veganerlnnen, Flexitarierlnnen, Vegetarierlnnen und andere umweltbewusste Konsumentinnen - auf der Suche nach einer nachhaltigen Alternative zu Ei, welche pflanzlich und allergenfrei ist, wenig gesättigte Fette sowie möglichst wenige oder keine künstlichen Zutaten enthält, um das Ei in verschiedenen Produkten und Kochrezepten zu ersetzen.

Aus den genannten Gründen besteht daher vermehrt das Bedürfnis einen Ei-Ersatz zu finden, um die gewünschten ernährungsphysiologischen, kulinarischen und techno-funktionellen Eigenschaften von Hühnereiern zu ersetzen. Diese Eigenschaften beinhalten unter anderem:
- Gelierung (thermische Gelierung, Wasserhaltevermögen)
- Bindung (Quellungseigenschaften, Verdickung)
- Stabilisation (Dispergier- und Suspendierfähigkeit)
- Fettbindungsvermögen (Emulgierfähigkeit)
- Schäumungsverhalten (Schaumvolumen, Schaumstabilität)

In gewissen Rezepten werden Hausmittel als Ei-Ersatz verwendet. Beispiele hierfür sind pürierte Bananen, Apfelmus, Seidentofu oder in Wasser eingeweichte Lein- oder Chiasamen als Ersatz für Eier beim Backen; Backpulver-Mischungen oder die Verwendung von CO2-versetztem Wasser (Sprudelwasser) als Backtriebmittel oder Mehl-Wasser-Mischungen als Bindemittel.

Nachteil solcher Hausmittel ist, dass diese oft nur eine einzige Eigenschaft von Eiern ersetzen. Zudem ermöglicht keine davon eine Ei-ähnliche Gelierung unter Hitzeeinwirkung.

Das Kochwasser von Hülsenfrüchten, auch Aquafaba genannt, wird sowohl in der Literatur als auch in sozialen Medien von interessierten Gruppen thematisiert (Stantiall et al., 2018; Shim et al., 2018; Buhl, 2019; Patent WO 2020/030819 A1 von Carter, 2020; Wikipedia, 2022). Anstrengungen, die Zusammensetzung von Aquafaba zu standardisieren, wurden von verschiedenen Akteurlnnen unternommen (Patent WO 2020/030819 A1 von Carter, 2020; Patent EP 3 788 885 A1 von Reaney und Mustafa, 2021). Historische Belege zeigen, dass die Verwendung von Bohnen- und Erbsenwasser bereits in Kriegszeiten seine Anwendung unter dem Namen "falscher Eischnee" fand. Wie der Name bereits sagt, kann Aquafaba vor allem als Eischnee-Ersatz dienen, da die primäre Funktionalität bei der Schäumung liegt. Diese Funktionalität wird bereits breit genutzt, so zum Beispiel mit dem Produkt "Oggs" von Alternative Foods (Alternative Foods, 2022) mit dem Patent WO 2020/030819 A1 (Carter, 2020), mit dem Patent US 2018/303105 A1 (Desjardins-Lavisse et al., 2018) oder dem Patent EP 3 788 885 A1 (Reaney und Mustafa, 2021). Andere Funktionalitäten, wie zum Beispiel Gelierung, können mit Aquafaba nicht erreicht werden.

In gewissen Rezepten werden pulverförmige Mischungen von Stärken, Proteinen, Mehlen und/oder Fasern, oft in Kombination mit anderen Zusatzstoffen wie Verdickungsmitteln, Emulgatoren und/oder Farbstoffen, als Ei-Ersatz vorgeschlagen. Dazu gehören zum Beispiel Produkte mit Bestandteilen aus Mikroalgen, Leinsamen- oder Kichererbsenmehl (Patent WO 2009/021110 A1 von Elmusa et al., 2009; Patent WO 2018/011786 A1 von Reifen et al., 2018; Patent FR 3 110 339 A1 von Barre und Traore, 2020; Patent WO 2021/176454 A1 von Lengel und Yehezkeli, 2021; Patent WO 2021/116949 A1 von Noble et al., 2021). Produkte dieses Typs sind oft pulverförmige Ei-Ersatzprodukte, zum Beispiel die Produkte von Biovegan (Biovegan, 2022), die Produkte von MyEy (MyEy, 2022) oder das Produkt "Zero Egg" von der gleichnamigen Firma (Zero Egg, 2022) mit dem Patent WO 2019/220431 A1 (David, 2019). Diese können bindende und verdickende, teilweise auch stabilisierende oder schäumende Funktionen des Hühnereis in gewissen Produktgruppen zumindest ansatzweise übernehmen. Der Einsatzbereich und die Funktionalitäten, insbesondere die thermische Gelierung, sind jedoch in der Praxis sehr eingeschränkt und können die vollständigen technofunktionelle, kulinarischen und ernährungsphysiologischen Eigenschaften von Ei nicht komplett ersetzen.

Flüssige Ei-Ersatzprodukte basieren größtenteils auf denselben Grundstoffen wie pulverförmige, welche in den vorhergehenden Absätzen gelistet sind. Um ein flüssiges Ei-Ersatzprodukt zu erhalten, werden diese Grundstoffe typischerweise mit Wasser, einem oder mehreren Ölen oder Fetten, einem wässrigen Extrakt oder einer Mischung dieser Komponenten gemischt (Patent WO 2019/164651 A1 von Altman und McClure, 2019; Patent WO 2021/116949 A1 von Noble et al., 2021). Durch die Vermischung mit einer geeigneten Menge an Emulgatoren und/oder Proteinen kann aus einer wässrigen und einer ölhaltigen Phase auch eine Emulsion, zum Beispiel eine pflanzenbasierte Milchalternative wie im Patent WO 2020/080947 A1 (Tarazanova, 2020) gebildet werden, welche ebenfalls mit den pulverförmigen Zutaten gemischt werden kann. Einige dieser flüssigen Ei-Ersatzprodukte versprechen eine bessere Funktionalität, können aber umstrittene Zutaten wie beispielsweise Tetrasodiumpyrophosphat, Natriumdiphosphat, Natriumcarboxymethylcellulose und andere Zusatzstoffe (zum Beispiel Konservierungsmittel) enthalten, wie zum Beispiel das Produkt Just Egg von der gleichnamigen Firma (Just Egg, 2022) oder das Produkt VeganEgg von Follow Your Heart (Follow Your Heart, 2022).

Obwohl einige Ei-Ersatzstoffe im Handel erhältlich sind und der Einsatz von Hausmitteln bereits praktiziert wird, besteht weiterhin Bedarf nach einem Ei-Ersatz, der zentrale technofunktionelle, kulinarische und ernährungsphysiologische Eigenschaften ersetzen kann und dabei ohne künstliche Zusatzstoffe auskommt.

Die US 2022/046949 A1 bezieht sich auf eine essbare Zusammensetzung, die mindestens 5 Gew.-% einer strukturierten wässrigen Phase umfasst, die mindestens 5 Gew.-% einer Kombination aus denaturiertem Patatin und Leguminosensamen-Globulin enthält.

Unter dem Begriff "Leguminosensamen" versteht der Erfinder Samen einer Pflanze, die zur Familie der Fabaceae gehören. In diesem Zusammenhang beschreibt der Erfinder Hülsenfrüchte wie Alfalfa, Klee, Erbsen, Kichererbsen, Linsen, Lupine, Mesquite, Johannisbrot, Sojabohne, Erdnüsse und Tamarinde. Das Leguminosensamen-Globulin wird gemäß Erfinder in einer bevorzugten Ausführungsform in Form eines Proteinisolats bereitgestellt, das mindestens 50 Gew.-%, vorzugsweise mindestens 70 Gew.-% und am meisten bevorzugt mindestens 85 Gew.-% an undenaturiertem Leguminosensamen-Globulin enthält. Der Erfinder verwendet beispielsweise ein Proteinisolat des Herstellers Roquette Nutralys^{®} S85F. Die 7S-Globuline liegen typischerweise gemäß dieser Vorveröffentlichung als Trimere mit einer scheinbaren Molekülmasse von 150 bis 190 kDa vor, wobei jede der Untereinheiten eine molare Masse von etwa 50 bis 70 kDa aufweist. Die Untereinheiten sind über hydrophobe und wasserstoffgebundene Wechselwirkungen miteinander verbunden, ohne dass Disulfidbindungen beteiligt sind. Die Denaturierung von 7S-Globulin erfolgt in der Regel bei einer Temperatur im Bereich von 71 bis 83°C. Die thermische Denaturierungstemperatur von 7S-Globulin wird zum Beispiel durch die lonenstärke beeinflusst.

Als Beispiel beschreibt diese Vorveröffentlichung eine wässrige Proteinlösung mit einem Proteingehalt von 10 Gew.-%, die auf der Grundlage der erwähnten Tabelle 1 hergestellt wurde. Anschließend wurde das Elastizitätsmodul von Proben dieser Proteinlösung gemessen, nachdem die Proteinlösung auf 90°C erhitzt worden war.

Der Erfinder beansprucht in seinem Hauptanspruch eine essbare Zusammensetzung, die mindestens 5 Gew.-% umfasst von einer strukturierten wässrigen Phase, die eine Kombination aus Patatin und Leguminosensamen-Globulin enthält, wobei die strukturierte wässrige Phase (von den Autoren als Phase, die ein "three dimensional network" umfasst, definiert) 60 bis 98 Gew.-% Wasser enthält, 1 bis 15 Gew.-% denaturiertes Patatin, 1 bis 15 Gew.-% Leguminosensamen-Globulin, welches als 7S-Globulin, 11S-Globulin und Kombinationen davon spezifiziert ist, wobei die Kombination aus denaturiertem Patatin und dem Leguminosensamen-Globulin in der strukturierten wässrigen Phase in einer Konzentration von mindestens 5 Gew.-% vorliegen soll. Das denaturierte Patatin und das Leguminosensamen-Globulin sind in einem Gewichtsverhältnis von 4:1 bis 1:4 vorhanden. Die strukturierte wässrige Phase enthält 0,1 bis 15 Gew.- % gelöstes Alkalichloridsalz, wobei die strukturierte wässrige Phase 10 bis 100 Gew.- % der essbaren Zusammensetzung ausmacht. Der pH-Wert der strukturierten wässrigen Phase soll zwischen 6,0 und 8,5 liegen und die strukturierte wässrige Phase soll 0,1 bis 20 Gew.-% Leguminosensamen-Albumin, bezogen auf Leguminosensamen-Globulin, enthalten. Als essbare Zusammensetzung wird ein Fleischersatzprodukt vorgeschlagen, wobei das Fleischersatzprodukt 30 bis 65 Gew.-% der strukturierten wässrigen Phase und 10 bis 70 Gew.-% hydratisierte texturierte pflanzliche Proteinfasern enthält, wobei die hydratisierten texturierten pflanzlichen Proteinfasern 40 bis 90 Gew.-% Pflanzenprotein und 20 bis 75 Gew.-% Wasser enthalten. Das rekonstituierbare Fleischersatzprodukt, umfasst bezogen auf das Gewicht des rekonstituierbaren Fleischersatzprodukts, 2 bis 35 Gew.-% nicht denaturiertes Patatin, 2 bis 35 Gew.-% nicht denaturiertes Leguminosensamen-Globulin, ausgewählt aus 7S-Globulin, 11S-Globulin und Kombinationen davon, 20 bis 65 Gew.-% texturierte pflanzliche Proteinfasern, 5 bis 50 Gew.-% Öl, 2 bis 12 Gew.-% Salz und 0 bis 15 Gew.-% Wasser. Bei Durchführung des Verfahrens wird dieses mit einer Kombination einer wässrigen Flüssigkeit mit (i) nicht denaturiertem Patatin und (ii) nicht denaturiertem Leguminosensamen-Globulin durchgeführt, ausgewählt aus nicht denaturiertem 7S-Globulin, nicht denaturiertem 11S-Globulin und Kombinationen davon, und anschließendem Erhitzen auf eine Temperatur von mindestens 55°C.

Die WO 2021/116949 A1 betrifft eine Trockenei-Ersatzzusammensetzung, umfassend etwa 1 % bis etwa 100% von Euglena abgeleitetes Material, etwa 0,05% bis etwa 70% zusätzliche Proteinquelle und einen oder mehreren zusätzlicher Inhaltsstoffe, wobei die Trockenei-Ersatzzusammensetzung eine oder mehrere funktionelle Eigenschaften eines natürlichen Eies umfasst. Das von Euglena abgeleitete Material wird aus einer Gruppe ausgewählt, bestehend aus einer Euglena-Biomasse, von Euglena abgeleitetem Protein, einem von Euglena abgeleiteten proteinreichen Mehl, einem von Euglena abgeleiteten Proteinkonzentrat, einem von Euglena abgeleiteten Proteinisolat, einem von Euglena abgeleitetem Beta-Glucan-Isolat, von Euglena abgeleiteten Ölen und Kombinationen davon. Die zusätzliche Proteinquelle wird ausgewählt aus der Gruppe bestehend aus Erbsenprotein, Sojaprotein, Maisprotein, Weizenprotein, Reisprotein, Bohnenprotein, Samenprotein, Nussprotein, Mandelprotein, Erdnussprotein, Seitanprotein, Linsenprotein, Kichererbsenprotein, Leinsamenprotein, Wildreisprotein, Maisprotein, Chiasamenprotein, Quinoaprotein, Haferprotein, Ackerbohnenprotein, Buchweizenprotein, Bulgurprotein, Hirseprotein, Mikroalgenprotein, gelbes Erbsenprotein, Mungobohnenprotein, Hanfprotein, Sonnenblumenprotein, Rapsprotein, Lupinenprotein, Hülsenfrüchteprotein, Kartoffelprotein und Kombinationen davon. Weiterhin kommen eine oder mehrere zusätzliche Bestandteile aus einer Gruppe in Betracht, die Hydrokolloide, Geschmacksstoffe, Antioxidantien, Triebmittel, Maskiermittel, Bindemittel, verschiedenste Öle und weitere Stoffe umfassen. Diese Trockenei-Ersatzzusammensetzung enthält mindestens 6 Gramm Protein, wobei das Verhältnis von Euglena abgeleitetem Material zu Erbsenprotein etwa 20:80 bis etwa 50:50 beträgt. Die zusätzliche Proteinquelle ist in einer Menge von etwa 20 % bis etwa 60 % vorhanden, wobei eine oder die mehreren Hydrokolloide in einer Menge von etwa 0,05% bis etwa 8% vorliegen. Das Öl kann etwa 5% bis etwa 20% der Eiersatz-Emulsion ausmachen, wobei die Eiersatz-Emulsion einem natürlichen Ei ähnliche Eigenschaften aufweisen soll. Des weiteren werden ebenfalls Flüssigei-Ersatzzusammensetzungen sowie Herstellungsmethoden für Rührei beansprucht.

Aus DATABASE GNPD [Online] MINTEL, 4. März 2015, anonymous "Natural Egg Replacer", XP055954975, Datanase accession no. 3037165, ist ein Eiweiß- und Eigelbersatz bekannt, das sich zum Kochen und Backen von Vorspeisen, Hauptgerichten, Desserts und Kuchen eignet. Es ist frei von GVO, Ei, Milch und Soja und ist wirksam zum Aufschlagen, Binden, Auflockern oder Verfeinern. Außerdem ist My Ey bio, vegetarisch und vegan zertifiziert. Es wird als rein pflanzlich und natürlich beschrieben und kommt in 200g-Packung auf den Markt, wie es in dieser Vorveröffentlichung heißt. Gemäß diesem Dokument wurde My Ey auf der Biofach 2015 in Nürnberg wohl erstmalig ausgestellt. My Ey Ei-Ersatz enthält Maisstärke, pflanzliches Eiweiß (Eiweißquelle) (Kartoffelprotein, Erbsenprotein, Lupinenmehl), Maltodextrin, Steinsalz, Kurkuma (pulverisiert), schwarzes Salz, Geliermittel (Xanthan, Johannisbrotkernmehl), weißer Pfeffer (gemahlen), 75,6% aus biologischem Anbau. Zutaten gemäß D3 sind Maisstärke*, pflanzliche Eiweißquelle (Kartoffelprotein, Erbsenprotein, Lupinenmehl), Maltodextrin*und andere Stoffe in geringen Mengen.

Die US 2021/059284 A1 beschreibt ein Verfahren zur Herstellung einer standardisierten Aquafaba-Zusammensetzung, umfassend Einweichen einer Hülsenfruchtsorte während einer bestimmten Zeit bei einer bestimmten Temperatur, nasse Wärmebehandlung des eingeweichten Samens für eine vorbestimmte Zeit bei einer vorbestimmten Temperatur und einem vorbestimmten Druck und Abtrennen der Flüssigkeit (Aquafaba) aus dem Samen zur Verwendung als Schaum- und Emulgiermittel. Des Weiteren wird ein Verfahren beschrieben, um eine Aquafaba-Molken-Zusammensetzung herzustellen, umfassend das Einweichen einer Hülsenfruchtsorte während einer bestimmten Zeit bei einer bestimmten Temperatur, das Mischen der eingeweichten Hülsenfruchtsorte mit einer flüssigen Basis, um eine Suspension zu erzeugen, das Trennen der Suspension, um eine Milch und einen Okara-Brei zu erzeugen; das Kochen der Milch und Abkühlen auf eine vorbestimmte Temperatur, um einen Käsebruch und Molke zu bilden, und das Abtrennen der Molke vom Käsebruch zur Verwendung als Schaum- und Emulgiermittel. Es werden jeweils ebenfalls prozessabhängige Produkte beansprucht, die aus den beschriebenen Verfahren entstehen. Wie aus dieser Literaturstelle weiter hervorgeht, wird das Verfahren zur Herstellung des Aquafaba-Schaums aus der Hülsenfruchtmolke beschrieben, wobei die Schaumkapazität und die Schaumstabilität des Aquafaba-Schaums gemessen wird, der aus der Hülsenfruchtmolke hergestellt wurde, und wobei die gemessene Schaumkapazität und Schaumstabilität des Aquafaba-Schaums mit einem Referenzstandard verglichen wird, um die Eignung für eine bestimmte Aquafaba-Verwendung zu bestimmen.

Die WO 97/42834 A1 bezieht sich auf Lebensmittelzusammensetzungen, die undenaturiertes Kartoffelprotein als Zutat enthalten, insbesondere auf Lebensmittelzusammensetzungen, in denen das gesamte oder ein Teil des tierischen Proteins, des Milchproteins, des Fetts oder der Hydrokolloide durch undenaturiertes Kartoffelprotein ersetzt ist, und auf ein Verfahren zur Herstellung eines solchen undenaturierten Proteins. Im Dokument D5 wird ein Verfahren zur Herstellung von undenaturiertem Kartoffelprotein beansprucht, bei dem eine Fraktion, die undenaturiertes Kartoffelprotein enthält, einer Konzentration und gegebenenfalls einer Trocknung unterzogen wird, wobei das Verfahren dadurch gekennzeichnet ist, dass die Temperaturen in den Schritten, die der Trocknung der Fraktion vorausgehen, 40°C nicht überschreiten. Dabei soll die Fraktion, die das nicht denaturierte Kartoffelprotein enthält, einer Vorbehandlung bei einer Temperatur im Bereich von 10 bis 40°C unterzogen werden, wobei die Fraktion konzentriert wird. Das nicht denaturierte Kartoffelprotein wird bei einer Temperatur im Bereich von 15 bis 25°C konzentriert und gegebenenfalls bei einer Produkttemperatur getrocknet, die 75°C nicht überschreitet. Es wird ebenfalls beansprucht, dass die Fraktion, die das nicht denaturierte Protein enthält, durch Ausfällung vorbehandelt wird, wobei die Ausfällung durch Calcium- und Phosphatverbindungen vorgenommen werden kann. Die Fraktion, die das nicht denaturierte Kartoffelprotein enthält, wird durch Ultrafiltration konzentriert. Das Konzentrat wird durch Gefriertrocknung bei einer Temperatur von weniger als 35°C getrocknet, wobei das Konzentrat nach der Ultrafiltration einer Diafiltration unterzogen wird, bevor das Konzentrat getrocknet wird.

Die Druckschrift DATABASE GNPD [Online] MINTEL, 3. Juli 2020, anonymous "Original Vegan Mayonnaise", XP055954553, Database accession no. 7924685, beschreibt Mayonnaisen, die unter Verwendung von Öl, Aquafaba, weißem Zucker, Salz, Essig und anderen Stoffen hergestellt werden.

### Aufgabe

Der Erfindung liegt zunächst die Aufgabe zugrunde, ein Ei-Ersatzprodukt zu schaffen, welches Eier und/oder dessen Funktionalitäten in verschiedensten Ei-typischen Anwendungen ersetzen kann.

Des Weiteren liegt der Erfindung die Aufgabe zugrunde, eine Verfahrensweise vorzuschlagen, mittels derer sich derartige Ei-Ersatzprodukte fabrikatorisch herstellen lassen.

Schließlich liegt der Erfindung die Aufgabe zugrunde, die Verwendung für derartige Ei-Ersatzprodukte vorzuschlagen.

### Lösung der Aufgabe hinsichtlich eines Produkts

Diese Aufgabe wird gemäß **Patentanspruch 1** durch ein Ei-Ersatzprodukt für Hühnervollei oder Hühnereiklar gelöst, mit einer Trockenmasse von 2 bis 60% (w/w), bevorzugter 5 bis 45% (w/w), bevorzugter 8 bis 40% (w/w), bevorzugter 10 bis 35% (w/w), bevorzugter 12 bis 35% (w/w), bevorzugter 14 bis 32% (w/w), bestehend aus einer verzehrbaren Mischung aus (a) einem wässrigen Heißextrakt aus Leguminosen oder Bestandteile davon, oder einer Kombination daraus, wobei die Zusammensetzung des wässrigen Heißextrakts derjenigen entspricht, die sich bei einer wässrigen Heißextraktion bei bevorzugt 60 bis 120°C, bevorzugt 80 bis 120°C, bevorzugt 90 bis 110°C, bevorzugt 80 bis 110°C, bevorzugt 60 bis 110°C, bevorzugt 60 bis 101°C, bevorzugt 80 bis 101°C, bevorzugt 90 bis 101°C ergibt und der Anteil an Nicht-Protein im wässrigen Heißextrakt oder Fraktion/en davon, bezogen auf die Trockenmasse des wässrigen Heißextrakts, mehr als 20% (w/w), bevorzugt mehr als 30% (w/w), bevorzugter mehr als 40% (w/w), bevorzugter mehr als 50% (w/w), bevorzugter mehr als 60% (w/w), bevorzugter mehr als 70% (w/w) beträgt, und aus (b) nativen Proteinen oder einer Fraktion der nativen Proteine, vorliegend als Proteinkonzentrat, Proteinisolat oder Kombinationen davon, wobei mindestens eines der zugesetzten Proteine thermisch fixierbar ist, bevorzugt bei 50 bis 100°C, bevorzugter bei 55 bis 90°C, aus einer oder mehreren Nicht-Leguminosen, wobei es sich bei der/den Nicht-Leguminosen um mindestens einen Rohstoff oder Kombinationen mehrerer Rohstoffen aus Wurzeln oder Knollen handelt, insbesondere Kartoffeln, wobei das Verhältnis des Gewichts der Trockenmasse des/der zugesetzten Proteins/Proteine zum Gewicht der Trockenmasse des eingesetzten Heißextrakts 0.05 bis 5, bevorzugter 0.08 bis 4.5, bevorzugter 0.09 bis 4, bevorzugter 0.1 bis 3.5, bevorzugter 0.1 bis 3, bevorzugter 0.1 bis 2.5, bevorzugter 0.1 bis 2, bevorzugter 0.1 bis 1.75, am bevorzugtesten 0.15 bis 1.5, beträgt.

### Einige Vorteile

Auffällig ist bereits beim Mischen des wässrigen Extrakts mit Protein und optional zugesetzter Stärke und/oder optional zugesetztem Mehl/zugesetzten Mehlen, dass dabei eine deutlich stabilere Suspension entsteht als beim Einsatz von Wasser anstelle des wässrigen Extrakts. Dies ist besonders vorteilhaft für eine konstante Zusammensetzung des Produkts bei seiner Anwendung, wo sich verbesserte technofunktionelle Eigenschaften zeigen. Diese Eigenschaften sind zum Beispiel höhere Gelierfähigkeit, vor allem bei Hitzeeinwirkung, ein besseres Wasserbindungsvermögen, eine verbesserte Schaumstabilität nach Aufschäumen durch Lufteintrag; eine bessere Emulgierung und eine verbesserte Bindung.

Die Bezeichnung "Protein" oder "Proteine" oder "Protein aus einer Rohstoffquelle" oder Proteine aus einer Rohstoffquelle» oder vergleichbare Bezeichnungen oder sinngemäß vergleichbare Bezeichnungen beschreibt/beschreiben in der Regel die Gesamtheit oder einen Teil der Gesamtheit der in dieser Rohstoffquelle vorkommenden Proteine.

Als erhebliche, überraschende Erkenntnis hat sich herausgestellt, dass in einer beispielhaften Ausführungsform des Produkts durch Verwendung von Kartoffelprotein (beispielsweise bei 3 bis 8% [w/w]) die Konzentration des Kartoffelproteins in einer Beispielanwendung mit Kichererbsenkochwasser (Beispiel für ein "Aquafaba") zur Erzielung einer gewünschten Produktfestigkeit deutlich niedriger gewählt werden konnte als dies mit Wasser der Fall war.

Unter "Aquafaba" versteht man einen wässrigen Extrakt aus Hülsenfrüchten, oft Heißextrakt genannt, beispielsweise auch als Nebenerscheinung einer Dosensterilisierung. Ebenfalls kann es sich um eine Kaltextraktion handeln, teilweise auch um eine Kombination, zum Beispiel durch kombiniertes Erhitzen mit einer Dauerlagerung in Dosen oder anderen Gebinden. Aquafaba enthält je nach Extraktionsbedingungen in der Trockenmasse oft 20 bis 35% [w/w] Protein sowie meist über 50% [w/w] Polysaccharide (zum Beispiel Stärke, Pektine, Hemicellulosen, löslicher Zucker). Die Begriffe "Aquafaba" und "Hülsenfruchtwasser" sind in der gesamten Beschreibung synonym verwendet. Die Abkürzung "[w/w]", im Englischen "weight per weight", bezeichnet eine Gewichtsprozent-Angabe. Sie entspricht der Angaben "g/100g", gelegentlich wird auch "%wt" verwendet.

Durch den Einsatz von Aquafaba statt Wasser kann bei vergleichbaren oder geeigneteren Produkteigenschaften zum einen Protein eingespart bzw. durch ein Nebenprodukt aus der Leguminosenverarbeitung ersetzt werden, zum anderen zeichnen sich die Produkte auch, bedingt durch die niedrigere Konzentration des Proteins, durch eine wesentlich geringere sensorische Note des Proteins in der Anwendung aus. Dabei ist es grundsätzlich unerheblich, ob dem Produkt Stärke zugesetzt wurde oder nicht, die Verwendung von Aquafaba führte jeweils zu einer deutlichen Verbesserung der Gelfestigkeit.

Durch den Zusatz nativer Proteine und gegebenenfalls nativer Stärken kann das Produkt thermisch geliert werden. Dabei hat sich herausgestellt, dass in einer bevorzugten Ausführungsform die Gelierungstemperatur in einem ähnlichen Temperaturfenster liegt wie diejenige von Ei, bevorzugt 50 bis 100°C, bevorzugter 55 bis 90°C, am bevorzugtesten 60 bis 85°C, so dass vorteilhafterweise mit Ei funktionierende Rezepturen kaum oder nicht angepasst werden müssen. Eine thermisch induzierte Gelierung des Produkts ist irreversibel. Das thermisch gelierte Produkt behält seine Gel-Eigenschaften dementsprechend auch nach dem Abkühlen bei.

Als besonders überraschend hat sich herausgestellt, dass durch die Verwendung von Aquafaba (zum Beispiel aus Kichererbsen oder aus einer Mischung von Kichererbsen und Gelberbsen; Trockenmasse 6% [w/w]) statt Wasser als Lösungsmittel für das verwendete Protein (zum Beispiel Kartoffelprotein; 4% [w/w]), der Penetrationswiderstand eines Gels, bevorzugt thermisch und/oder durch Säure und/oder Enzyme geliert, deutlich erhöht wurde, um mindestens 5%, bevorzugt um mindestens 10%, bevorzugt um mindestens 20%, bevorzugter um mindestens 30%, bevorzugter um mindestens 40%, bevorzugter um mindestens 50%, bevorzugter um mindestens 60%, bevorzugter um mindestens 70%, bevorzugter um mindestens 80%, bevorzugter um mindestens 90%, am bevorzugtesten um mindestens 100%, wobei der Penetrationswiderstand mit einem handelsüblichen Textur-Analyser (zum Beispiel von Stable Microsystems) gemessen wurde.

Ebenso gilt diese überraschende Erkenntnis bei gleicher Mischung und gleichen Massenanteilen für die Wasserbindung der Gele. So ist die Wasserbindung bei Gelen, bevorzugt thermisch und/oder durch Säure und/oder durch Enzyme geliert, durch die Verwendung von Aquafaba statt Wasser als Lösungsmittel für das verwendete Protein deutlich erhöht, um mindestens 10% [w/w], bevorzugt mindestens 20% [w/w], bevorzugter mindestens 30% [w/w], bevorzugter mindestens 40% [w/w], bevorzugter mindestens 50% [w/w], bevorzugter mindestens 60% [w/w], bevorzugter mindestens 70% [w/w], bevorzugter mindestens 80% [w/w], bevorzugter mindestens 90% [w/w], am bevorzugtesten mindestens 100% [w/w], wobei die Wasserbindung durch Differenzwägung vor und nach einem standardisierten, thermischen Erhitzen in einer offenen Pfanne bestimmt wurde. Die Versuche deuten beispielsweise darauf hin, dass Kartoffelprotein und Aquafaba synergistisch zusammenwirken. Die synergistische Wirkung von mindestens zwei Proteinen oder mindestens einem Protein und mindestens einem Co-Polymer ist bekannt. Man macht sie sich in verschiedenen Anwendungsfeldern zunutze, zum Beispiel in der kosmetischen Industrie oder in pflanzenbasierten Ersatzprodukten für tierische Lebensmittel (Patent WO 2019/088834 A1 von Zhu et al., 2019). Für den Bereich Ei-Ersatz wurde diese Wirkung bisher nicht festgestellt.

Interessanterweise kann auch die Drainagegeschwindigkeit bei gleicher Mischung und gleichen Massenanteilen in Schäumen reduziert werden. So ist die Zeit, nach der 50% [w/w] des anfänglich im Schaum gebundenen Fluids aus dem Schaum wieder abgeschieden sind, um mindestens 40% [w/w], bevorzugter um mindestens 60% [w/w], bevorzugt um mindestens 80% [w/w], bevorzugt um mindestens 100% [w/w], erhöht, wenn das beispielhaft verwendete Kartoffelprotein in Aquafaba statt in Wasser dispergiert wird.

Hinsichtlich Schäumung zeigt das Produkt zudem eine um mindestens 10%, bevorzugt mindestens 20%, bevorzugt mindestens 30%, bevorzugt mindestens 50% höhere Schaumstabilität und ein um mindestens 5%, bevorzugt mindestens 10%, bevorzugt mindestens 20%, bevorzugt mindestens 30%, bevorzugt mindestens 50%, bevorzugt mindestens 100%, erhöhtes Aufschlagvolumen im Vergleich zu einer Situation, bei der die Proteinkomponente der Mischung nur in Wasser statt dem beispielhaft verwendeten Aquafaba geschäumt wird.

Hinsichtlich Emulgierwirkung zeigt das Produkt eine höhere Emulsionsstabilität und kleinere Tropfengrößenverteilung sowie geringere Koaleszenz im Vergleich zu einer Situation, bei der die Emulsion aus einer Mischung der Proteinkomponente mit Wasser statt dem beispielhaft verwendeten Aquafaba hergestellt wird.

In einigen erfinderischen Ausführungsformen kann dem Produkt ein oder mehrere farbgebende Inhaltsstoffe und/oder Farbstoffe und/oder färbende Lebensmittel zugefügt sein. Diese können in Pulverform oder in flüssiger Form vorliegen und können wasser- und/oder fettlöslich sein.

Farbgebende Komponenten und/oder Extrakte inkludieren bevorzugt aus natürlichen Rohstoffen bei denen es sich um ein oder mehrere Erzeugnisse aus Knollen, Wurzeln und Gemüsen, bevorzugter aus Karotten (beta carotin) und/oder Kurkuma und/oder rote Beete, handelt.

In einigen erfinderischen Ausführungsformen kann das Produkt Hefe, Hefextrakte, Salz, Schwarzsalz/Schwefelsalz, Zucker und/oder Gewürze wie Pfeffer oder Paprika und/oder Kombinationen, davon enthalten.

Es sollte jedoch beachtet werden, dass die ausführliche Beschreibung und die spezifischen Beispiele, obwohl die beschriebene bevorzugten Ausführungsformen der Erfindung nur der Veranschaulichung dienen, da verschiedene Ausführungsformen, Änderungen und Modifikationen im Rahmen der Erfindung und des Anwendungsbereichs der Erfindung Fachleuten aus dieser detaillierten Beschreibung ersichtlich werden.

Gemäß der Erfindung kann es sich in einigen Ausführungsformen bei dem/den wässrig extrahierbaren Bestandteil/en oder wässrig extrahierbaren Fraktion/en des Rohstoffes um eine oder mehrere Fraktion/en eines wässrigen Extrakts handeln.

Unter "wässrig extrahierbarer Fraktion" versteht man einen oder mehrere Bestandteile des extrahierten Rohstoffs, die grundsätzlich durch wässrige Extraktion gewonnen werden kann/können, wobei somit mit "wässrig extrahierbarer Fraktion" eine stoffliche Eigenschaft beschrieben ist.

Unter "wässrigem Extrakt" versteht man die Gesamtheit der wässrig extrahierten Fraktion/en, die effektiv bei einer wässrigen Extraktion in das Extraktionsmittel übergehen. Dabei müssen nicht alle Fraktionen/Bestandteile echt gelöst sein, sondern es sind damit Verbindungen gemeint, die bei üblichen industriellen Trennschritten (Separation, zum Beispiel Dekantieren) im wässrigen Überstand verbleiben, aber sich trotzdem mit der Zeit aus dem wässrigen Überstand abtrennen können (zum Beispiel durch Aggregatbildung).

Bei der Rohstoffquelle kann es sich dabei um ganze, fraktionierte (zum Beispiel durch Trockenfraktionierung), dehydrierte oder frische Komponenten eines Rohstoffs/ mehrerer Rohstoffe handeln, die je nach Verwendung bereits vorverarbeitet worden sein können (beispielsweise gekocht, eingelegt und/oder fermentiert).

In einigen erfinderischen Ausführungsformen kann der wässrigen Extraktion ein Quellvorgang, bevorzugt in Wasser, von 0,5 bis 40 h, bevorzugter 1 bis 30 h, bevorzugter 1.5 bis 20 h, bevorzugter 2 bis 10 h, vorangehen. Dieser Vorgang kann zusätzlich einen Gefrier- oder Erwärmungsschritt beinhalten.

In einigen erfinderischen Ausführungsformen kann vor der Extraktion eine nasse oder trockene Vermahlung der Rohstoffquelle in kaltem oder heißem Zustand erfolgen, wobei die Kaltextraktion bei -40°C bis 40°C, bevorzugt bei -20°C bis 30°C, bevorzugter bei -5°C bis 25°C, am bevorzugtesten bei 0°C bis 25°C, abläuft.

Die Extraktion kann mit Wasser oder einem anderen Lösungsmittel wie beispielsweise Kuhmilch oder Fraktionen von Kuhmilch vollzogen werden. Zusätzlich kann als Hilfsstoff zur Extraktion Salz, Natriumcarbonat, Essig, Zitronensaft oder Alkohol, wie zum Beispiel Ethanol, beigefügt werden, das heißt die Qualität des Lösungsmittels durch Salzart und -konzentration sowie durch den pH oder polarer oder weniger polare Stoffe verändert und das Extraktionsergebnis so gesteuert werden. Ebenso wird das Extraktionsergebnis durch eine Vorbehandlung zur Zerkleinerung der Rohstoffe verändert und gesteuert (ganze Rohstoffe wie zum Beispiel gesamte Kichererbse, gebrochene Rohstoffe, bei denen der Median der Partikelgrößenverteilung 0.3 bis 5 Millimeter, bevorzugter 0.5 bis 3 Millimeter, bevorzugter 1 bis 2 Millimeter beträgt, sowie vermahlene Rohstoffe, bei denen der Median der Partikelgrößenverteilung 20 bis 1000 Mikrometer, bevorzugt 30 bis 500 Mikrometer, beträgt.

Wird von Extrakt oder wässrig extrahierbare Fraktion aus einem Rohstoff, beispielsweise von "Extrakt aus Leguminosen" oder "wässrig extrahierbare Fraktion aus Leguminosen", gesprochen oder von Protein aus einem Rohstoff, beispielsweise "Protein aus Leguminose", so ist immer der Extrakt oder das Protein aus typischerweise zur Proteingewinnung und/oder Stärkegewinnung und/oder Fettgewinnung herangezogene Teile des Rohstoffs gemeint, beispielsweise das Haferkorn und nicht die Haferpflanze insgesamt, das Buchweizenkorn und nicht die Buchweizenpflanze insgesamt, die Kartoffelknolle und nicht beispielsweise der oberirdische Teil der Kartoffelpflanze oder der Sojasamen und nicht die Sojapflanze.

Bei der Extraktion von wässrig extrahierbaren Fraktionen aus Rohstoffen (zum Beispiel Leguminosen) wird das Extraktionsergebnis, insbesondere der Proteinanteil im Extrakt, über den pH-Wert bei der Extraktion gesteuert. Vorzugsweise wird das Aquafaba bei einem pH-Wert von 5 bis 10, bevorzugter 5.5 bis 9, noch bevorzugter 6 bis 8, gewonnen. Unabhängig davon wird der pH-Wert des wässrigen Extrakts vor Verwendung in der Mischung auf einen pH-Wert von 4.5 bis 7.5, bevorzugter 5 bis 7, noch bevorzugter 5.5 bis 6.5, eingestellt.

In einigen erfinderischen Ausführungsformen kann der Anteil der Trockenmasse stammend aus dem wässrigen Extrakt 2 bis 30% [w/w], bevorzugter 3 bis 25% [w/w], am bevorzugtesten 5 bis 15% [w/w], der Gesamttrockenmasse des Produkts betragen.

In einigen erfinderischen Ausführungsformen kann der Anteil der Trockenmasse stammend aus dem wässrigen Extrakt 10 bis 70% [w/w], bevorzugt 15 bis 60% [w/w], bevorzugt 15 bis 50% [w/w], bevorzugt 15 bis 40% [w/w], bevorzugt 15 bis 35% [w/w], bevorzugt 20 bis 50% [w/w], bevorzugt 20 bis 35% [w/w], der Gesamttrockenmasse des Produkts betragen.

In einigen erfinderischen Ausführungsformen kann der Anteil der Trockenmasse stammend aus dem wässrigen Extrakt 30 bis 85% [w/w], bevorzugt 30 bis 75% [w/w], bevorzugt 30 bis 60% [w/w], bevorzugt 30 bis 50% [w/w], bevorzugt 30 bis 45% [w/w], bevorzugt 40 bis 50% [w/w], bevorzugt 50 bis 60% [w/w], bevorzugt 35 bis 75% [w/w], bevorzugt 40 bis 60% [w/w], der Gesamttrockenmasse des Produkts betragen.

Das Produkt kann in weiten Bereichen konzentriert werden. Der Anteil der Trockenmasse des Produkts beträgt in einigen erfinderischen Ausführungsformen mindestens 2% [w/w], bevorzugt mindestens 3% [w/w], bevorzugter mindestens 5% [w/w], bevorzugter mindestens 8% [w/w], bevorzugter mindestens 10% [w/w], bevorzugter mindestens 20% [w/w]. In einigen erfinderischen Ausführungsformen beträgt der Anteil der Trockenmasse des Produkts höchstens 50% [w/w], bevorzugter höchstens 45% [w/w], bevorzugter höchstens 40% [w/w], bevorzugter höchstens 35% [w/w], bevorzugter höchstens 30% [w/w], bevorzugter höchstens 25% [w/w].

Bezogen auf den wässrigen Extrakt kann dieser durch Entzug und/oder Zugabe einer Flüssigkomponente (zum Beispiel Wasser) auf einen beliebigen Trockensubstanz-Gehalt eingestellt werden, die Bereiche entsprechend den oben für das Gesamtprodukt genannten. Mittels Entzug eines Teils des enthaltenen Wassers kann es zudem zu Konzentrat oder zu Pulver verarbeitet werden (zum Beispiel mittels Sprüh- oder Gefriertrocknung).

Dieser Anspruch beschreibt das Verhältnis der Trockenmasse des zugesetzten Proteins zur Trockenmasse der zugesetzten wässrig extrahierbaren Fraktion oder der Trockenmasse eines wässrigen Extrakts.

In einigen erfinderischen Ausführungsformen kann der Anteil des zugesetzten Proteins der Nicht-Leguminose am Anteil der Gesamttrockenmasse des Produkts 1 bis 50% [w/w], bevorzugter 15 bis 40% [w/w], am bevorzugtesten 15 bis 25% [w/w], betragen.

In einigen erfinderischen Ausführungsformen kann der Anteil des zugesetzten Proteins der Nicht-Leguminose am Anteil der Gesamttrockenmasse des Produkts 5 bis 80% [w/w], bevorzugter 10 bis 60% [w/w], bevorzugter 20 bis 60% [w/w], bevorzugter 30 bis 50% [w/w], betragen.

Je nach Wahl der Extraktionsbedingungen kann sich der Anteil an Nicht-Protein, also beispielsweise Polysacchariden wie Stärken, Nahrungsfasern, löslichen Zuckern deutlich unterscheiden. Bereiche für eine Zusammensetzung eines wässrigen Extrakts, typischerweise in einem pH-Bereich von 6 bis 7.5 und bei 100 bis 101°C gewonnen, sind:

| | |
|---|---|
| Wassergehalt: | 90 bis 96 % [w/w] |
| Kohlenhydrate: | 2 bis 5 % [w/w] |
| davon Zucker: | 0,5 bis 2 % [w/w] |
| Protein: | 0,5 bis 3 % [w/w] |
| Fett: | 0 bis 0,5 % [w/w] |

Bringt man hingegen die wässrig extrahierbare Fraktion aus extrahierten und beispielsweise getrockneten, teilweise oder vollständig gereinigten Einzelbestandteilen, zusammen, besteht völlige Freiheit bei der Zusammensetzung dieses Teils/Komponente der Mischung.

Durch die Wahl der Temperatur kann die Zusammensetzung des wässrigen Extrakts verändert werden. Bei Temperaturen über der Denaturierungstemperatur der Proteine oder Proteinfraktionen werde alle oder ein Teil der Proteine denaturiert und somit zumindest teilweise wasserunlöslich gemacht und/oder in ihrer Funktionalität verändert. Stärken können teilweise oder vollständig verkleistern. Bevorzugt werden Proteine, die thermostabil und wasserlöslich sind, wobei der Begriff Löslichkeit keine echte Löslichkeit voraussetzt, sondern eine kolloidale Löslichkeit der Proteine, umfasst. Die Heißextraktion wird bei 40 bis 121 °C, bevorzugt 60 bis 120°C, bevorzugt 80 bis 120°C, bevorzugt 90 bis 110°C, bevorzugt 80 bis 110°C, bevorzugt 60 bis 110°C, bevorzugt 40 bis 110°C, bevorzugt 60 bis 101°C, bevorzugt 80 bis 101°C, bevorzugt 90 bis 101°C, durchgeführt. Extraktionstemperaturen von über 100°C setzen in der Regel einen Gegendruck voraus. Druckseitig wird bei Überdrücken von bis zu 1.5 bar, bevorzugt 1.1 bar, bevorzugt 0.85 bar, extrahiert, wobei dies sowohl für die Heißextraktion wie auch für die Kaltextraktion gilt.

Die Gelfestigkeit des gelierten Produkts kann bei einigen erfinderischen Ausführungsformen mindestens 5%, bevorzugt mindestens 10%, bevorzugt mindestens 20%, bevorzugt mindestens 30%, bevorzugt mindestens 40%, bevorzugt mindestens 50%, bevorzugt mindestens 60%, bevorzugt mindestens 80%, bevorzugt mindestens 100%, bevorzugt mindestens 150%, bevorzugt mindestens 200%, über der Gelfestigkeit eines vergleichbaren Gels basierend alleine auf dem in der Mischung verwendeten Protein liegen. Diese überraschende Wirkung wird bei gleichen absoluten Proteinmengen durch den wässrigen Extrakt verursacht, was auf eine synergistische Wirkung hindeutet.

Es handelt sich beim Produkt um ein "heat-set" Gel, welches also bei Hitzeeinwirkung geliert und dessen Gelierung irreversibel ist, es also nach Abkühlen seine feste Gelstruktur beibehält. Es ähnelt dem Hühnerei, welches damit in diversen Lebensmittel-Anwendungen ersetzt werden kann und beispielsweise zu einer besseren Texturierung und Strukturierung von Produkten führt. Die Quantifizierung der Gelierungstemperatur erfolgt mit einem DSC und einer Heizrate von 10°C pro Minute.

In einigen erfinderischen Ausführungsformen kann es sich beim verwendeten Protein um Proteinisolat, Proteinkonzentrat oder um ein proteinhaltiges Mehl oder um ein proteinhaltiges Pulver oder um ein in flüssiger Form vorliegendes oder gelöstes Protein handeln.

In einigen erfinderischen Ausführungsformen kann das Protein nativ sein.

In einigen erfinderischen Ausführungsformen kann mindestens eines der zugesetzten Proteine thermisch fixierbar sein, bevorzugt bei 50 bis 100°C, bevorzugter bei 55 bis 90°C, bevorzugter bei 55 bis 80°C, bevorzugter bei 55 bis 75°C, am bevorzugtesten bei 60 bis 70°C.

### Weitere erfinderische Ausgestaltungen

Weitere erfinderische Ausgestaltungen sind in den **Patentansprüchen 2** bis **16** beschrieben.

**Patentanspruch 2** wird dadurch gekennzeichnet, dass der wässrige Heißextrakt ein Aquafaba oder Teile davon, basierend auf Erbsen, Kichererbsen, Gelberbsen, Bohnen, Soja, Ackerbohnen, Mungobohnen, Linsen oder Lupinen, oder Kombinationen davon, oder Teilen davon, ist.

**Patentanspruch 3** wird dadurch gekennzeichnet, dass mindestens eine Stärke oder ein Mehl oder einer Kombination daraus zugesetzt ist, wobei es sich bei der/dem/den zugesetzte/n Stärke/n oder Mehl/Mehlen um ein oder mehrere Erzeugnis/Erzeugnisse aus Pseudo-Getreide, Süßgräsern, Gemüse, Leguminosen, Knollen, Wurzeln, Rosenartigen oder Nüssen bevorzugt aus Hirse, Hafer, Raps, Dinkel, Buchweizen, Amaranth, Zuckerrüben, Erbse, Gelberbse, Bohne, Soja, Cassava, Süßkartoffeln, Yam, Sago, Taro, Kudzu, Hanf, Haselnuss, am bevorzugtesten aus Mais, Weizen, Dinkel, Reis, Kichererbse, Ackerbohne, Mungobohne, Linse, Lupine, Kartoffel, Maniok, Pfeilwurz, Lein, Psyllium, Mandel, Cashewnuss, oder um eine Kombination davon handelt.

In einigen erfinderischen Ausführungsformen kann das Produkt eine oder mehrere zugesetzte Stärke/n und/oder Mehl/Mehle enthalten, bei der/dem/denen es sich um ein oder mehrere Erzeugnisse aus Pseudo-Getreide, Süßgräsern, Gemüse, Leguminosen, Knollen, Wurzeln oder Rosenartigen bevorzugt aus Bohnen, Erbsen, Kichererbsen, Soja, Cassava, Süßkartoffeln, Yam, Sago, Taro, Kudzu, am bevorzugtesten Mais, Weizen, Kartoffel, Maniok, Pfeilwurz, Lein, Psyllium, oder um eine Kombination davon handelt. Bei der Stärke oder den stärkehaltigen Mehlen kann es sich um modifizierte und/oder unmodifizierte und/oder native Stärken handeln.

Die zugesetzte Stärke oder das stärkehaltige Mehl kann unter anderem dazu dienen, eine oder mehrere techno-funktionelle Eigenschaften wie beispielsweise der Gelierung, Wasserbindung, Schäumbarkeit und Schaumstabilität, Emulgierkapazität und Emulsionsstabilität zu verändern und/oder Protein in der Mischung ersetzen, ohne dass sich die techno-funktionellen Eigenschaften wesentlich ändern. Beispielsweise kann durch Zugabe einer, beispielsweise pflanzlichen, Stärke der zum Erreichen vergleichbarer technofunktioneller Eigenschaften notwendige Anteil an Protein verringert werden kann, was einen ökonomischen Vorteil darstellt.

Dem Produkt können gegebenenfalls ein oder mehrere quellfähige Hydrokolloide zugesetzt sein. Diese können unter anderem der Wasserbindung und/oder Texturoptimierung und/oder Stabilisation und/oder Quellung und/oder Verdickung und/oder Bindung und/oder Thermostabilisation dienen. Die quellfähigen Hydrokolloide können, beispielsweise bei einem wässrigen Gesamtprodukt, mit einer Trockenmasse von 18% [w/w], 0.1-5% [w/w], bevorzugter 0.3-4% [w/w], noch bevorzugter 0.5-3% [w/w], der Mischung betragen. Hydrokolloide sind bevorzugt aus tierischen oder pflanzlichen Rohstoffen gewonnen, wie zum Beispiel aus Psyllium und/oder Leinsamen und/oder Guar und/oder Johannisbrot und/oder Fasern und/oder Pentosane, können aber beispielsweise auch biotechnologisch oder fermentation hergestellt worden sein. Die verwendeten Nahrungsfasern stammen bevorzugt aus Weizen, Roggen, Hafer, Mais, Erbse, Bohne, Kartoffel, Flachs, Akazie, Inulin, Karotte, Apfel. Dem Produkt können zudem Geliermittel wie Agar, Pektin, Gellan zugefügt werden.

In einigen erfinderischen Ausführungsformen kann das wässrige Gesamtprodukt, beispielsweise bei einer Trockenmasse von insgesamt 18% [w/w], 0.1 bis 10% [w/w], bevorzugt 0.1 bis 5% [w/w], bevorzugt 0.1 bis 4% [w/w], bevorzugt 0.5 bis 4% [w/w], bevorzugt 0.5 bis 3% [w/w] Nahrungsfasern enthalten.

Dem Produkt kann ein oder mehrere Emulgatoren aus tierischen oder pflanzlichen Quellen zugegeben werden, um die Emulgierfähigkeit des Produkts zu verbessern bevorzugt aus Leguminosen, Süßgräsern, Kernen und Nüssen oder Molke, bevorzugter aus Soja, Sonnenblumen, Raps, Erdnüsse oder Mais, beispielsweise Sojalecithin, Sonnenblumenlecithin, Saponine, Phospholipide.

**Patentanspruch 4** ist dadurch gekennzeichnet, dass in einer aufgeschäumten Produktausführung die Drainagestabilität, definiert als die benötigte Zeit, nach der 50% des anfänglich im Schaum gebundenen Fluids aus dem Schaum abgeschieden ist, um mindestens 40%, bevorzugt um mindestens 60%, am bevorzugtesten um mindestens 100% verlängert ist im Vergleich zur Stabilität eines Schaumes, der unter Verwendung einer einzelnen Komponente der Erfindung mit Wasser hergestellt wurde.

**Patentanspruch 5** ist dadurch gekennzeichnet, dass die Wasserbindung des gelierten Produkts, definiert als prozentual ausgedrückter Wasserverlust bezogen auf das Ausgangsgewicht nach einheitlicher Temperaturführung für 2 Minuten >100°C, um mindestens 20%, bevorzugt mindestens 30%, bevorzugter mindestens 40%, noch bevorzugter mindestens 50%, am bevorzugtesten mindestens 60%, verbessert ist im Vergleich zur Wasserbindung eines vergleichbaren Gels basierend auf dem/der in der Mischung verwendeten Proteins/Proteine in Wasser.

**Patentanspruch 6** ist dadurch gekennzeichnet, dass quellfähige Hydrokolloide wie Psyllium, Leinsamen, Guar, Johannisbrot, Pentosane, Agar, Pektin, Gellan oder andere, biotechnologisch oder fermentativ hergestellte Stoffe zugesetzt sind mit einem Anteil von 0.1-5% [w/w], bevorzugter 0.3-4% [w/w], noch bevorzugter 0.5-3% [w/w], bezogen auf das wässrige Produkt, oder dem Nahrungsfasern zugesetzt sind mit einem Anteil von 0.1 bis 10% [w/w], bevorzugt 0.1 bis 5% [w/w], bevorzugt 0.1 bis 4% [w/w], bevorzugt 0.5 bis 4% [w/w], bevorzugt 0.5 bis 3% [w/w] bezogen auf das wässrige Produkt, wobei die Nahrungsfasern bevorzugt aus Weizen, Roggen, Hafer, Mais, Erbse, Bohne, Kartoffel, Flachs, Akazie, Inulin, Karotte, Apfel stammen.

**Patentanspruch 7** ist dadurch gekennzeichnet, dass der Anteil an Protein in der Trockenmasse 20 bis 80% (w/w), bevorzugt 30 bis 70% (w/w), bevorzugter 20 bis 60% (w/w), beträgt.

Abweichend dazu kann in einigen Ausführungsformen der Anteil an Protein in der Trockenmasse des Produkts 10 bis 80% [w/w], bevorzugter 10 bis 75% [w/w], bevorzugter 10 bis 70% [w/w], bevorzugter 10 bis 65% [w/w], bevorzugter 10 bis 60% [w/w], bevorzugter 15 bis 85% [w/w], bevorzugter 15 bis 80% [w/w], bevorzugter 15 bis 75% [w/w], bevorzugter 15 bis 70% [w/w], bevorzugter 15 bis 65% [w/w], bevorzugter 15 bis 55% [w/w], bevorzugter 15 bis 50% [w/w], bevorzugter 15 bis 49% [w/w], bevorzugter 15 bis 45% [w/w], bevorzugter 20 bis 30% [w/w], bevorzugter 20 bis 40% [w/w], bevorzugter 20 bis 50% [w/w], bevorzugter 20 bis 60% [w/w], betragen.

In einigen erfinderischen Ausführungsformen umfasst die Zusammensetzung mindestens 20 % [w/w], mindestens 25 % [w/w], mindestens 30 % [w/w], mindestens 40 % [w/w], mindestens 50 % [w/w], mindestens 60 % [w/w], mindestens 70 % [w/w] oder mindestens 80 % [w/w], Protein.

Die Zusammensetzung des Proteins kann erfindungsgemäß stark variieren und wird vor allem durch den Zusatz von Protein mit Herkunft aus Nicht-Leguminosen sowie durch wässrig extrahierbares Protein aus einer weiteren Quelle bestimmt, wobei es sich dabei bevorzugt um einen wässrigen Extrakt handelt, nochmals bevorzugt Aquafaba. Je nach Extraktionsbedingungen sowie trenntechnischer Veränderung der Zusammensetzung nach der Extraktion kann der Proteinanteil bei einigen erfinderischen Ausführungsformen an der Trockenmasse des Produkts bis 80 % [w/w], bevorzugt bis 70% [w/w], bevorzugt bis 60% [w/w], bevorzugt bis 50% [w/w], bevorzugt bis 40% [w/w], bevorzugt bis 30% [w/w], betragen. Der Proteingehalt beträgt in der Trockenmasse in einigen Ausführungsformen mindestens 5% [w/w], bevorzugt mindestens 10% [w/w], bevorzugt mindestens 20% [w/w], bevorzugt mindestens 30% [w/w], bevorzugt mindestens 40% [w/w], bevorzugt mindestens 50% [w/w], bevorzugt mindestens 60% [w/w], bevorzugt mindestens 70% [w/w], bevorzugt mindestens 80% [w/w].

Das wässrige Gesamtprodukt kann in einigen erfinderischen Ausführungsformen, beispielsweise bei einer Trockenmasse von insgesamt 18% [w/w], einen absoluten Proteingehalt von 0.5 bis 17% [w/w], bevorzugt 1 bis 15% [w/w], bevorzugter 1.5 bis 14% [w/w], bevorzugter 1.8 bis 12% [w/w], bevorzugter 1.9 bis 10% [w/w], bevorzugter 1.9 bis 9% [w/w], bevorzugter 1.9 bis 7% [w/w], bevorzugter 1.9 bis 6% [w/w], bevorzugter 1.9 bis 5% [w/w], Protein enthalten.

In einigen erfinderischen Ausführungsformen kann die Trockenmasse mindestens 2 % [w/w], bevorzugt mindestens 5 % [w/w], bevorzugt mindestens 8 % [w/w], bevorzugt mindestens 10 % [w/w], bevorzugt mindestens 20 % [w/w], bevorzugt mindestens 25 % [w/w], bevorzugt mindestens 30 % [w/w], bevorzugt mindestens 40 % [w/w], bevorzugt mindestens 50 % [w/w], bevorzugt mindestens 60 % [w/w], bevorzugt mindestens 70 % [w/w], bevorzugt mindestens 80 % [w/w], Nicht-Leguminosen-Protein.

Andererseits kann die Trockenmasse in einigen erfinderischen Ausführungsformen bis zu 80% [w/w], bevorzugt bis zu 70% [w/w], bevorzugt bis zu 60% [w/w], bevorzugt bis zu 50% [w/w], bevorzugt bis zu 40% [w/w], bevorzugt bis zu 30% [w/w], bevorzugt bis zu 25% [w/w], bevorzugt bis zu 20% [w/w], bevorzugt bis zu 10% [w/w], bevorzugt bis zu 8% [w/w], bevorzugt bis zu 5% [w/w], bevorzugt bis zu 2% [w/w], Nicht-Leguminosen-Protein umfassen.

Der Anteil Protein aus Nicht-Leguminosen, beispielsweise Kartoffelprotein, am Gesamt-Protein des Produkts, kann in einigen erfinderischen Ausführungsformen bei 1 bis 80% [w/w], bevorzugt 2 bis 60% [w/w], bevorzugt 3 bis 40% [w/w], bevorzugt 5 bis 50% [w/w], bevorzugt 10 bis 50%% [w/w], bevorzugt 15 bis 40% [w/w], liegen.

Der Anteil Nicht-Leguminosen-Protein, beispielsweise Kartoffelprotein, am Gesamtprodukt, beispielsweise bei einer Trockenmasse von 18% [w/w], kann in einigen erfinderischen Ausführungsformen 0,1 bis 10% [w/w], bevorzugt 1 bis 10% [w/w], bevorzugt 1 bis 8% [w/w], bevorzugt 1.5 bis 8% [w/w], bevorzugt 1.9 bis 8% [w/w], am bevorzugtesten 1.9 bis 6% [w/w], betragen.

**Patentanspruch 8** ist dadurch gekennzeichnet, dass das Produkt, bezogen auf die Trockenmasse, 10 bis 80% [w/w], bevorzugt 20 bis 80% [w/w], bevorzugt 30 bis 70% [w/w], bevorzugt 30 bis 60% [w/w], bevorzugt 40 bis 60% [w/w], eine oder mehrere zugesetzte Stärken oder ein oder mehrere zugesetzte Mehle, oder eine Kombination daraus, enthält.

In einigen erfinderischen Ausführungsformen kann das Produkt bis zu 5% [w/w], bevorzugt bis zu 10% [w/w], bevorzugt bis zu 20% [w/w], bevorzugt bis zu 30% [w/w], bevorzugt bis zu 40% [w/w], bevorzugt bis zu 50% [w/w], bevorzugt bis zu 70% [w/w], bevorzugt bis zu 80% [w/w], einer oder mehrerer zugesetzter Stärken und/oder ein oder mehrere zugesetzte Mehle in der Trockenmasse enthalten.

In einigen erfinderischen Ausführungsformen kann der Anteil einer oder mehrerer zugesetzter Stärken und/oder ein oder mehrere zugesetzte Mehle mindestens 80% [w/w], bevorzugt mindestens 70% [w/w], bevorzugt mindestens 60% [w/w], bevorzugt mindestens 50% [w/w], bevorzugt mindestens 40% [w/w], bevorzugt mindestens 30% [w/w], bevorzugt mindestens 20% [w/w], bevorzugt mindestens 10% [w/w], in der Trockenmasse betragen.

In einigen erfinderischen Ausführungsformen beträgt der Stärkegehalt in der Trockenmasse 10 bis 80% [w/w], bevorzugt 20 bis 75% [w/w], bevorzugt 25 bis 70% [w/w], bevorzugt 30 bis 70% [w/w], bevorzugt 40 bis 60% [w/w].

Zu diesen Anteilen an zugesetzter Stärke kommt weitere Stärke und/oder Polysaccharide, die beispielsweise über den wässrigen Extrakt in das Produkt eingebracht wird. Stärke kann bei der vorliegenden Erfindung eingesetzt werden, um einen Teil des, beispielsweise für die Gelierung notwendigen, Proteins zu ersetzen.

In einigen erfinderischen Ausführungsformen kann das wässrige Gesamtprodukt, beispielsweise bei einer Trockenmasse von insgesamt 18% [w/w], 1 bis 25% [w/w], bevorzugt 2 bis 15% [w/w], bevorzugt 3 bis 15% [w/w], bevorzugt 2 bis 20% [w/w], bevorzugt 5 bis 20% [w/w], bevorzugt 5 bis 15% [w/w], bevorzugt 10 bis 20% [w/w], bevorzugt 4 bis 10% [w/w], einer oder mehrerer zugesetzter Stärken und/oder eines oder mehrerer stärkehaltiger Mehle enthalten.

**Patentanspruch 9** ist dadurch gekennzeichnet, dass dem Ei-Ersatzprodukt und/oder dem wässrigen Heißextrakt Fett und/oder Öl zugesetzt ist und bis zu 80% (w/w), bevorzugter bis zu 65% (w/w), bevorzugter bis zu 60% (w/w), bevorzugter bis zu 55% (w/w), bevorzugter bis zu 50% (w/w), bevorzugter bis zu 44% (w/w), bevorzugter bis zu 40% (w/w), der Trockenmasse beträgt.

In einigen erfinderischen Ausführungsformen kann im wässrig extrahierbaren Bestandteil oder im Produkt Fett und/oder Öl emulgiert werden. Die Begriffe "Fett" und "Öl" sind in der gesamten Beschreibung synonym verwendet. Der Öl-Anteil kann hierbei bis zu 80% [w/w], bevorzugt bis zu 60% [w/w], bevorzugt bis zu 50% [w/w], bevorzugt bis zu 40% [w/w], bevorzugt bis zu 35% [w/w], bevorzugt bis zu 30% [w/w], bevorzugt bis zu 25% [w/w], bevorzugt bis zu 20% [w/w], bevorzugt bis zu 15% [w/w], bevorzugt bis zu 10% [w/w], bevorzugt bis zu 5% [w/w], in der Trockenmasse betragen.

In einigen erfinderischen Ausführungsformen beträgt der Anteil an Fett mindestens 1%, bevorzugt mindestens 2%, bevorzugt mindestens 5%, bevorzugt mindestens 10%, bevorzugt mindestens 20%, bevorzugt mindestens 30%, bevorzugt mindestens 40%, bevorzugt mindestens 50%, bevorzugt mindestens 60%, bevorzugt mindestens 70%, bevorzugt mindestens 80%, bevorzugt mindestens 90%, in der Trockenmasse des Produkts. Zusätzlich kann durch die Erhöhung oder Senkung des pH-Wertes beim emulgieren des Fetts oder/und Öls, beispielsweise mit Essig, die Emulgierfähigkeit des Produkts verändert werden.

In einer beispielhaften Ausführung beträgt, bei einer Trockenmasse des Gesamtprodukts von 18% [w/w], die Menge des im Produkt enthaltenen Öls 0.5-10% [w/w], bevorzugt 1-8% [w/w], bevorzugt 2-6% [w/w], bevorzugt 3-5% [w/w].

In einigen erfinderischen Ausführungsformen kann der wässrig extrahierbare Bestandteil/Fraktion emulgierte Fett oder Öl-Anteile enthalten und ist damit vergleichbar hinsichtlich Zusammensetzung mit einem Kuhmilch-ähnlichen oder Pflanzenmilch-ähnlichen Produkt (umgangssprachlich pflanzliche Milch oder Pflanzenmilch, pflanzlicher Rahm oder Pflanzenrahm genannt). Hierfür werden dem wässrigen Extrakt nicht-tierische Fette, bevorzugt pflanzliche Fette, zugegeben und zusammen mit dem wässrigen Extrakt emulgiert. In einigen erfinderischen Ausführungsformen kann das Fett und/oder Öl auch dem bereits gemischten Produkt beigefügt werden.

Bei den zugesetzten Fett/en und/oder Öl/en kann es sich um pflanzliche und/oder tierische Fette und/oder Öle handeln. Bevorzugt sind Öle aus Lein, Walnuss, Pistazien, Oliven, Raps, Kürbiskerne, Kokos, Sonnenblume, Distel Avocado, Butterschmalz sowie Milchfett.

Beispiele von Anwendungen, in welchen die emulgierenden Eigenschaften von Hühnerei entscheidend sind, als Ei- oder Eiklar- oder Vollei-Alternative, sind in Anwendungen warmen oder kalten Soßen oder Cremen, bevorzugt Mayonnaisen, Salatsoßen, Dressings, Vinaigrette, Beilagensoßen, Dessertcremen, etc.

**Patentanspruch 10** ist dadurch gekennzeichnet, dass das Ei-Ersatzprodukt thermisch verfestigt ist, wobei der Temperaturbereich 50°C bis 121°C, 55°C bis 100°C, bevorzugter 58°C bis 99°C, bevorzugter 60°C bis 90°C, am bevorzugtesten 60 bis 85°C, beträgt.

**Patentanspruch 11** ist dadurch gekennzeichnet, dass dem Produkt Leguminosenprotein oder Leguminosenmehl oder eine Kombination daraus zugesetzt ist und der Proteinanteil daraus, bezogen auf den gesamten Proteinanteil des Ei-Ersatzprodukts, in der Trockenmasse höchstens 90% (w/w), bevorzugt höchstens 80% (w/w), bevorzugt höchstens 70% (w/w), bevorzugt höchstens 60% (w/w), bevorzugt höchstens 50% (w/w), bevorzugt höchstens 40% (w/w), bevorzugt höchstens 35% (w/w) bevorzugt höchstens 25% (w/w), bevorzugt höchstens 15% (w/w), beträgt.

Das Ei-Ersatzprodukt kann in einigen Ausführungsformen, bezogen auf die Trockenmasse, mindestens 10% [w/w], bevorzugter mindestens 20% [w/w], bevorzugter mindestens 40% [w/w], bevorzugter mindestens 60% [w/w], bevorzugter mindestens 70% [w/w], bevorzugter mindestens 75% [w/w], bevorzugter mindestens 80% [w/w], am bevorzugtesten mindestens 90% [w/w] zugesetztem Protein aus Leguminosen enthalten.S

Das Produkt kann, beispielsweise bei einer Trockenmasse von 18% [w/w], in einigen erfinderischen Ausführungsformen 1 bis 15%, bevorzugter 2 bis 10%, am bevorzugtesten 2.5 bis 6%, Leguminosen-Protein enthalten.

Das Ei-Ersatzprodukt kann in einigen Ausführungsformen, bezogen auf die Trockenmasse, mindestens 10% [w/w], bevorzugter mindestens 20% [w/w], bevorzugter mindestens 40% [w/w], bevorzugter mindestens 60% [w/w], bevorzugter mindestens 70% [w/w], bevorzugter mindestens 75% [w/w], bevorzugter mindestens 80% [w/w], am bevorzugtesten mindestens 90% [w/w] Leguminosen oder Teile davon enthalten.

Andererseits kann das Ei-Ersatzprodukt in einigen Ausführungsformen, bezogen auf die Trockenmasse, bis zu 90% [w/w], bevorzugter bis zu 80% [w/w], bevorzugter bis zu 75% [w/w], bevorzugter bis zu 70% [w/w], bevorzugter bis zu 60% [w/w], bevorzugter bis zu 50% [w/w], bevorzugter bis zu 40% [w/w], bevorzugter bis zu 30% [w/w], bevorzugter bis zu 20% [w/w], bevorzugter bis zu 10% [w/w] Leguminosen oder Teile davon enthalten.

In einigen erfinderischen Ausführungsformen kann der Anteil an Leguminosen oder Teilen davon in der/den wässrig extrahierbaren Fraktion/en, bezogen auf die Trockenmasse der wässrig extrahierbaren Fraktion/en, mindestens 10% [w/w] betragen, bevorzugt mindestens 20% [w/w], bevorzugt mindestens 40% [w/w], bevorzugt mindestens 60% [w/w], bevorzugt mindestens 80% [w/w], bevorzugt mindestens 90% [w/w], bevorzugt mindestens 95% [w/w], am bevorzugtesten mindestens 97% [w/w].

Das Produkt kann, bei einer beispielhaften Trockenmasse von 18% [w/w], in einigen erfinderischen Ausführungsformen 0,1-5% [w/w], bevorzugter 0.3-5% [w/w], bevorzugter 0.5-4% [w/w], noch bevorzugter 1-3% [w/w], eines oder mehrerer quellfähiger Hydrokolloide, bevorzugt Psyllium, Leinsamen oder Exopolysaccharide aus Mikroorganismen, enthalten.

**Patentanspruch 12** ist dadurch gekennzeichnet, dass das Produkt vor Verwendung aus zwei getrennt voneinander gelagerten Komponenten besteht, wobei mindestens eine Komponente dehydriert vorliegt.

In einigen erfinderischen Ausführungen kann das Produkt als Mischung vorliegen. Nach dem Mischvorgang kann das Produkt in hohen, mittleren oder bevorzugt niedrigen Temperaturbereichen, bevorzugter zwischen 50°C bis 90°C, bevorzugter zwischen 52 bis 85°C, bevorzugter zwischen 53 bis 75°C, bevorzugter zwischen 54 bis 70°C, am bevorzugtesten zwischen 55 bis 65°C, pasteurisiert oder sterilisiert werden. Eine Haltbarmachung mittels Hochdruckpasteurisierung ist ebenfalls möglich. Anschließend kann das Produkt in hitzebeständige Behälter abgefüllt werden.

**Patentanspruch 13** ist dadurch gekennzeichnet, dass das Produkt dehydriert vorliegt.

**Patentanspruch 14** ist dadurch gekennzeichnet, dass es sich statt um einen wässrigen Heißextrakt aus Leguminosen, um einen wässrigen Heißextrakt aus Getreiden, Süßgräsern, Pseudo-Getreiden, Hanfgewächsen, Nüssen, Speisepilzen, oder Reis, Hafer, Weizen, Dinkel, Buchweizen, Amaranth, Hanf, Mandeln, Haselnüssen, Cashewnüssen, Champignons, oder Bestandteile davon, oder Kombinationen daraus, handelt.

**Patentanspruch 15** ist dadurch gekennzeichnet, dass es sich statt der/den Nicht-Leguminosen um native Proteinen oder einer Fraktion der nativen Proteine, vorliegend als Proteinkonzentrat, Proteinisolat oder Kombinationen davon, aus einer oder mehreren Nicht-Leguminosen wobei es sich bei der/den Nicht-Leguminosen um mindestens einen pflanzlichen oder mikrobiellen Rohstoff oder Kombinationen daraus, aus Pseudo-Getreide, Süßgräser, Hanfgewächse, Nüsse, Rotalge, Grünalge, Blaualge, Wurzeln, Knollen, Zuckerrüben, Weizen, Mais, Hirse, Reis, Hafer, Raps, Lein, Hanf, Erdnüssen, Haselnüssen, Mandeln, Cashews, Purpurtang, Chlorella oder Spirulina, Maniok, Cassava, Süßkartoffeln, Yam, Sago, Taro oder Kartoffeln handelt.

**Patentanspruch 16** ist dadurch gekennzeichnet, dass das Produkt in einer wässrigen Ausführungsform über 60 Minuten, bevorzugt über 30 Minuten, am bevorzugtesten über 10 Minuten, sedimentationsstabil ist.

### Lösung der Aufgabe betreffend das Verfahren

Diese Aufgabe wird durch **Patentanspruch 17** und **18** gelöst.

**Patentanspruch 17** ist dadurch gekennzeichnet, dass ein wässriger Heißextrakt mit einem oder mehreren Nicht-Leguminosenproteinen gemischt und diese Mischung einem Haltbarmachungsverfahren unterzogen wird, wobei die wässrige Heißextraktion bei 60 bis 120°C, bevorzugt 80 bis 120°C, bevorzugt 90 bis 110°C, bevorzugt 80 bis 110°C, bevorzugt 60 bis 110°C, bevorzugt 60 bis 101°C, bevorzugt 80 bis 101°C, bevorzugt 90 bis 101°C, ausgeführt wird, derart, dass der Anteil an Nicht-Protein im wässrigen Heißextrakt oder Fraktion/en davon, bezogen auf die Trockenmasse des wässrigen Heißextrakts, mehr als 20% (w/w), bevorzugt mehr als 30% (w/w), bevorzugter mehr als 40% (w/w), bevorzugter mehr als 50% (w/w), bevorzugter mehr als 60% (w/w), bevorzugter mehr als 70% (w/w), beträgt.

**Patentanspruch 18** ist dadurch gekennzeichnet, dass der Anteil an Bestandteilen über 500 Da, bevorzugter über 1 kDa, bevorzugter über 2 kDa, bevorzugter über 5 kDa, bevorzugter über 10 kDa, bevorzugter über 20 kDa, bevorzugter über 30 kDa mindestens 2% (w/w), bevorzugter mindestens 5% (w/w), bevorzugter mindestens 10% (w/w), bevorzugter mindestens 20% (w/w), bevorzugter mindestens 30% (w/w), bevorzugter mindestens 40% (w/w), bevorzugter mindestens 50% (w/w), bevorzugter mindestens 60% (w/w), bevorzugter mindestens 70% (w/w), bevorzugter mindestens 80% (w/w), bezogen auf die Trockenmasse, im wässrigen Heißextrakt beträgt.

In einem Schritt wird die Pulverkomponente und der wässrig extrahierbare Bestandteil gemischt, wobei die Pulverkomponente mindestens teilweise dispergiert und so eine relativ homogene Suspension oder eine Lösung entsteht. Mit erhöhter Standzeit erfolgt eine Verdickung der Suspension. Die weitere Verwendung erfolgt entweder direkt nach dem Mischvorgang oder nach erneutem Durchmischen der Dispersion als Ei-Ersatz.

Die Dispersion kann auch weiter stabilisiert werden, was ein erneutes Durchmischen überflüssig macht.

In einigen erfinderischen Ausführungsformen kann der/die wässrig extrahierbare Bestandteil/Fraktion bzw. die wässrig extrahierbaren Bestandteile/Fraktionen, insbesondere ein wässriger Extrakt, zusätzlich fraktioniert werden, um veränderte Funktionalitäten zu erzielen. Zur Fraktionierung kann beispielsweise eine mechanische, physikalische oder chemische Trennung angewendet werden. Mechanische Vorgänge inkludieren zum Beispiel Sieben, Filtern, Dekantieren, Zentrifugieren.

Überraschenderweise hat sich gezeigt, dass die Fraktionierung, zum Beispiel über Membrantrenntechnik, zu Fraktionen führt, die unterschiedliche Funktionalitäten aufweisen. So kann der Anteil an Bestandteile mit höherem Molekulargewicht (beispielsweise Proteine, Polysaccharide oder Kombinationen davon) im wässrigen Extrakt erhöht werden, was dazu führt, dass die funktionelle Wirkung des wässrigen Extrakts in der Mischung verändert, bevorzugt verstärkt, wird.

Die techno-funktionellen Eigenschaften des Extrakts können durch Zugabe von sauren oder basischen Zusätzen angepasst werden, zum Beispiel durch Fruchtsäfte, Säuren, Laugen, bevorzugt Zitronensaft, Essig oder Natriumhydrogencarbonat.

In einigen erfinderischen Ausführungsformen wird der pH-Wert des fertig prozessierten, wässrigen Extrakts in einem Bereich von 4 bis 12, bevorzugter 5 bis 10, am bevorzugtesten 5 bis 8, liegen.

### Lösung der Aufgabe hinsichtlich der Verwendung

Diese Aufgabe wird durch die Merkmale des **Patentanspruches 19** gelöst, bei welchem das Produkt in Schäumen oder gashaltigen, hühnereifreien oder hühnereireduzierten Koch- oder Backprodukten Verwendung findet, bevorzugt in Meringues, Makronen, Macarons, Kuchen, Muffins, Biskuit, Brioche, veganem Eischnee, Marshmallows, Schokoküssen oder vergleichbaren Produkten, vorzugsweise thermisch oder mechanisch oder in einer Kombination daraus erzeugt und vorzugsweise thermisch oder durch mechanisch induzierte Gelierung oder einer Kombination daraus fixiert ist, oder als Gelbildner oder Bindemittel oder einer Kombination daraus in hühnereifreien oder hühnereireduzierten Koch- oder Backprodukten, bevorzugter Rührei, Omelett, Quiche, Tartes, Aufläufen, Teigwaren, Panaden, Soßen, Cremen, Puddings, Tiramisu, Desserts, Curd, Pancakes, Kuchen, Biskuit, Muffins, Fleischalternativen, Burgerpatties oder vergleichbaren Produkten Verwendung findet.

Das Produkt kann statt in hühnereifreien oder hühnereireduzierten Koch- und Backprodukten auch in kuhmilchfreien oder kuhmilchreduzierten Koch- und Backprodukten als Kuhmilchersatz, Butterersatz oder Rahmersatz verwendet werden. Das Produkt kann auch als Ersatz für Trinkmilch verwendet werden.

Das Produkt kann in einigen erfinderischen Ausführungsformen statt als Ersatzprodukt für Hühnervollei, Hühnereiklar oder Hühnereigelb, als Ersatzprodukt für Kuhmilch und/oder Kuhmilcherzeugnisse und/oder daraus hergestellte Erzeugnisse verwendet werden.

### Beispiel 1: Herstellung des wässrigen Extrakts aus getrockneten Hülsenfrüchten, Mischvorgang mit der Proteinkomponente und Herstellung der Erfindung als einsatzfertige Dispersion

Zur Herstellung des Extrakts werden in diesem Beispiel eine Mischung getrockneter Hülsenfrüchte 4 bis 16 h in Wasser gequollen. Anschließend werden die gequollenen Feststoffe durch ein Sieb mit 5000 µm fraktioniert und mit frischem Wasser für 60 bis 120 Minuten bei 80 bis 100°C extrahiert. Durch Heißextraktion werden gewünschte funktionelle Bestandteile im Kochwasser gelöst.

Der Proteingehalt im Extrakt hängt erheblich von der Wahl des pH-Wertes bei der Extraktion ab. So gehen erheblich mehr Proteine in Lösung, wenn der pH-Wert auf über 8 eingestellt wird. Zur Erhöhung des Verhältnisses Protein zu Nicht-Protein in der Trockenmasse des Extrakts wird bevorzugt ein pH-Bereich von 7.5 bis 11, bevorzugter, 8 bis 10, bevorzugter 8.5 bis 10, noch bevorzugter 9 bis 10, verwendet. Zur Gewinnung von Aquafaba wird ein pH-Bereich von 4 bis 10, bevorzugter 5 bis 9, bevorzugt 6 bis 8, bevorzugter 6.5 bis 8, bevorzugter 6.5 bis 7.5, gewählt. Je nach pH-Bedingungen, Vermahlungsgrad und Rohstoffquelle kann eine Zusammensetzung bezogen auf Protein, Fett und Kohlenhydrate erzielt werden, die derjenigen einer handelsüblichen pflanzlichen Milch, Milchersatz auf Pflanzenbasis entspricht. Insofern können kommerzielle Milchprodukte ebenfalls als wässriger Extrakt bzw. auf die Trockenmasse als wässrig extrahierbare Fraktion verwendet werden.

Nach Abschöpfen der gekochten Hülsenfrüchte kann das flüssige Extrakt mit einem Filter von bevorzugt 200 bis 1000 µm, bevorzugter 200 bis 800 µm, bevorzugter 250 bis 600 µm, am bevorzugtesten 300 bis 500 µm, Maschenweite fraktioniert werden.

Durch die Zugabe von Wasser wird das Extrakt auf eine Konzentration von 3 bis 10 Brix standardisiert. Anschließend wird durch Zugabe von Säure oder einer Komponente mit niedrigerem pH-Wert der pH-Wert des Extrakts auf den gewünschten Bereich von 4 bis 9 gesenkt. Das Extrakt wird während oder nach der Abfüllung zur Haltbarmachung einem Pasteurisations- oder Sterilisationsschritt unterzogen. Anschließend wird das pulverförmige Nicht-Leguminosen-Protein - in diesem Beispiel zusammen mit der Stärkekomponente - vermischt. Optional kann auch eine Fett- oder Öl-Komponente zugefügt werden.

### Beispiel 2: Dispersionsstabilität

Die Erfindung stellt eine Dispersion dar. Die im Lösungsmittel enthaltenen Partikel sind hierbei stabiler als in einer Dispersion, in welcher nur der wässrig extrahierbare Bestandteil oder nur die Protein- und ggf. Stärkekomponente zusammen mit Wasser enthalten ist.

Die Erfindung in der Ausführungsform von einer Mischung aus 4% Kartoffelproteinisolat in Kombination mit 8% pflanzlicher Stärke, gelöst in wässrigem Extrakt aus Hülsenfrüchten, zeigt eine bessere Dispersion als in derselben Konzentration in Wasser bei identischer Mischmethodik.

10 Minuten nach Dispersion durch Aufrühren von Hand wird die schwächere Dispersionsstabilität der Mischung mit Wasser durch Sedimentation deutlich, wohingegen die Mischung mit wässrigem Extrakt aus Hülsenfrüchten keine derartige Sedimentation aufweist, wie nachfolgend zu sehen ist.

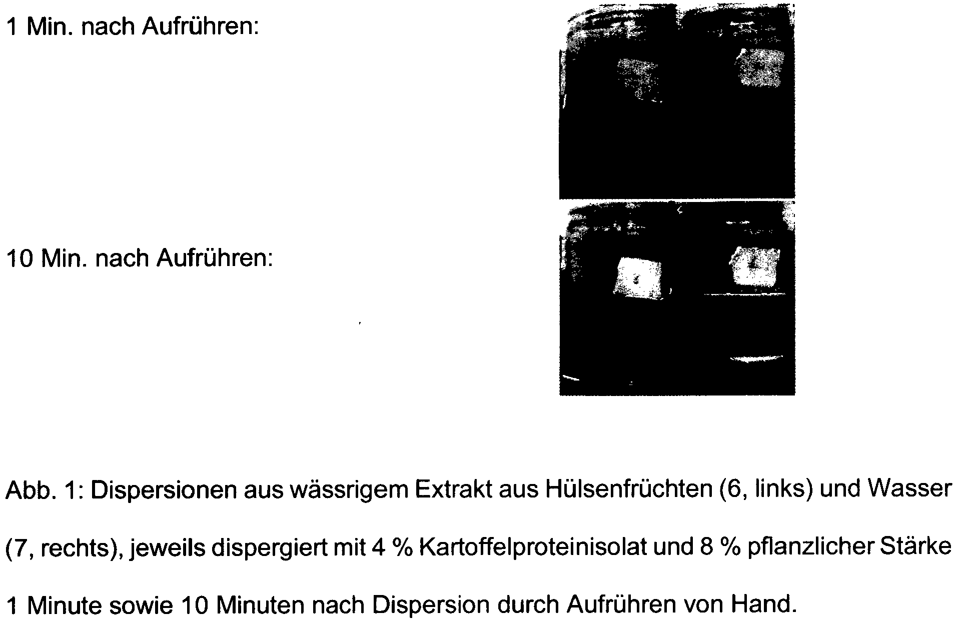

Auch über einen Zeitraum von 30 Minuten und 60 Minuten bleibt die Dispersion der Erfindung stabil im Gegensatz zur Dispersion mit Protein-Stärke-Komponente und Wasser.

### Beispiel 3: Schaumstabilität

Durch den Einsatz der Erfindung können stabilere Schäume erzeugt werden als unter Verwendung einer einzelnen Komponente der Erfindung mit Wasser, zum Beispiel in Kombination mit demselben Protein und Wasser oder unter der alleinigen Verwendung des wässrigen Extrakts ohne zugesetzten Proteinanteil. Zudem kann die Schaumstabilität bei Verwendung von Stärke weiter erhöht werden, wobei wiederum unter Verwendung der Erfindung ein stabilerer Schaum entsteht als unter Verwendung von Wasser in derselben Kombination.

Die benötigte Zeit, nach der 50% des anfänglich im Schaum gebundenen Fluids aus dem Schaum abgeschieden sind, kann in einigen erfinderischen Ausführungsformen beim aufgeschäumten Produkt um mindestens 40%, bevorzugt um mindestens 60%, am bevorzugtesten um mindestens 100% verlängert sein im Vergleich zur Stabilität eines Schaumes, der unter Verwendung einer einzelnen Komponente der Erfindung mit Wasser, zum Beispiel in Kombination mit demselben Protein und Wasser oder unter der alleinigen Verwendung des wässrigen Extrakts ohne zugesetzten Proteinanteil, hergestellt wurde.

Diese Erkenntnis wurde in einem replizierbaren Versuch beispielhaft belegt.

Die Erfindung in der Ausführungsform von 4% Kartoffelprotein, Hülsenfruchtwasser sowie Stärke zeigt eine bessere Schaumstabilität als Vergleich-Dispersionen. Die Ergebnisse zeigen eine bis zu 20-fach höhere Schaumstabilität sowie eine 2-fach höhere Schaumstabilität als Vergleichsdispersionen.

Als Methodik wurden je 50 ml der Dispersionen im Krüss Dynamic Foam Analyzer durch Lufteintrag geschäumt und die Messung der "drainage half life time" (Schaumflüssigkeitsstabilität in Bezug auf 50% des Anfangswertes) über einen Zeitraum von 30 Minuten (1800 Sekunden) je Probe bestimmt. Die "drainage half life time" wurde in relative Werte als Prozent der Gesamtbeobachtungszeit von 1800 Sekunden transformiert, um die Schaumstabilität prozentual zu quantifizieren. Die Ergebnisse sind in Tabelle 1 dargestellt.

**Tabelle 1: Schaumstabilität unterschiedlicher disperser Systeme. Gemessen mit Krüss Dynamic Foam Analyzer; CY4571 Prismasäule 40 mm; FL4551 Filterpapier 12 bis 25µm, Ø 32 mm; Observationszeit 30 Minuten/1800 Sekunden.**

| **Variante** | **drainage half life time [s]** | **Schaumstabilität (Anteil drainage half life time von Beobachtungszeit) [%]** |
|---|---|---|
| wässriges Extrakt aus Hülsenfrüchten | 470,2 | 26,12 |
| 4 % Kartoffelprotein in Wasser: | 91,5 | 5,08 |
| 4 % Kartoffelprotein in wässrigem Extrakt aus Hülsenfrüchten: | 945,1 | 52,51 |
| 4 % Kartoffelprotein + 8 % Stärke in Wasser | 772,5 | 42,92 |
| 4 % Kartoffelprotein + 8 % Stärke in wässrigem Extrakt aus Hülsenfrüchten | > 1800 | > 100 |

### Beispiel 4: Gel-Festigkeit

Eine der zentralen Eigenschaften von Ei-Ersatz ist die Gelierung. Gelbildende Stoffsysteme werden in der Lebensmittelindustrie in vielfältiger Weise eingesetzt, unter anderem zur Stabilisation und Bindung unterschiedlicher Lebensmittelmatrizes, beispielsweise in Backwaren.

Gele bestehen generell aus dreidimensional vernetzten Polymerketten in einem wässrigen Medium, wobei in den Zwischenräumen des dispergierten Polymernetzwerks das wässrige Medium eingeschlossen wird.

Man unterscheidet einerseits kalthärtende ("cold-set") Gele, welche aus einer heißen, flüssigen Dispersion beim Abkühlen entstehen, und andererseits heißhärtende ("heatset") Gele, welche erst unter Wärmeeinwirkung gelieren.

Der Vorgang der Gelierung kann reversibel oder irreversibel sein, je nachdem ob durch erneutes Erhitzen bzw. Abkühlen die Gelstruktur erhalten bleibt oder sich das Gel wieder verflüssigt. Gele unterscheiden sich unter anderem hinsichtlich ihrer Festigkeit, Elastizität und Wasserbindevermögen.

Die Erfindung in der Ausführungsform von wässrigem Extrakt aus Hülsenfrüchten in Kombination mit Kartoffelprotein und Stärkekomponenten führte zu einer höheren Festigkeit in Bezug auf die Gelbildung als Vergleichsdispersionen. Es konnte eine 5 bis 80-fache Verbesserung gegenüber den Vergleichsdispersionen festgestellt wurde.

Als Methodik wurde je 60g der flüssigen Dispersionen in einheitlichen Silikonformen im Ofen bei 150°C für 25 Minuten erhitzt und anschließend auf Raumtemperatur abgekühlt. Beim verwendeten Stärkeanteil handelte es sich um eine Kombination aus Maisstärke und Tapiokastärke mit stets gleichem Mengenverhältnis.

Die entsprechenden Messwerte sind in Tabelle 2 aufgeführt und quantitativ belegbar.

Die auf diese Weise thermisch gelierten dispersen Systeme, außerdem Vollei im Vergleich, wurden mittels Texture-Analyzer hinsichtlich Festigkeit untersucht.

Tabelle 2: Texturanalyse unterschiedlicher disperser Systeme. Messgerät und Parameter: Texture Analyzer TA HD Plus, Stable Micro Systems; 10 mm cylindrical probe, test speed: 0,5 mm/s; strain: 20 %. Mittelwerte aus Vierfachbestimmung.

| **Variante** | **Festigkeitl"Hardness" absolut [g]** | **Festigkeitl"Hardness" (% von Hühnervollei)** |
|---|---|---|
| 4 % Kartoffelprotein in Wasser: | 0,9 | 0,3 |
| 4 % Kartoffelprotein in wässrigem Extrakt aus Hülsenfrüchten: | 15 | 4,6 |
| 12 % Kartoffelprotein in Wasser | 287,8 | 87,8 |
| 12 % Kartoffelprotein in wässrigem Extrakt aus Hülsenfrüchten | 309,0 | 94,3 |
| 4 % Kartoffelprotein + 8 % Stärke in Wasser | 68,4 | 20,9 |
| 4 % Kartoffelprotein + 8 % Stärke in wässrigem Extrakt aus Hülsenfrüchten | 105,9 | 32,2 |
| Hühnervollei | 327,7 | 100,0 |

Die Vergleichsdispersionen mit tieferem Proteingehalt ergeben ein flaches, wenig geliertes, wässriges, instabiles und nicht schnittfestes Gel sowie viel ungebundene Flüssigkeit.

Die Erfindung ergibt ein schneidbares, formstabiles Gel mit deutlich weniger Wasseraustritt. Eine weitere Ausführungsform der Erfindung mit höherer Proteinkonzentration lässt sich auch das Protein-Wasser-Gemisch vollständig und ohne ungebundenes Wasser gelieren.

Die Vergleichsdispersion in der Form von reinem wässrigem Extrakt aus Hülsenfrüchten zeigte in Tests keinen gelierenden Effekt (blieb flüssig), weshalb die überproportional höhere Festigkeit und Wasserbindung der Kombination aus wässrigem Extrakt und Proteinkomponente, gegenüber Wasser und derselben Menge pflanzlichem Pro-tein, auf den Synergie-Effekt zwischen den beiden Komponenten zurückzuführen ist, was unter anderem Gegenstand der Erfindung ist.

### Beispiel 5: Wasserbindung

Aus dem Produkt gebildete Gele, beispielsweise durch thermische Gelierung, können mehr Wasser binden als Gele, welche nur aus einer der beiden Komponenten bestehen und nicht aus der Kombination aus beiden.

Die Wasserbindung des gelierten Produkts kann bei einigen erfinderischen Ausführungsformen um mindestens 20%, bevorzugt mindestens 30%, bevorzugter mindestens 40%, noch bevorzugter mindestens 50%, am bevorzugtesten mindestens 60%, verbessert sein im Vergleich zur Wasserbindung eines vergleichbaren Gels basierend alleine auf dem in der Mischung verwendeten Protein.

Die Erfindung in der Ausführungsform von wässrigem Extrakt aus Hülsenfrüchten in Kombination mit Kartoffelprotein und Stärkekomponenten führte zu einer besseren Wasserbindung als Vergleichsdispersionen.

In diesem Test wurde die Erfindung gegenüber einzelnen Komponenten mit Wasser als Vergleichsdispersion, teilweise in Kombination mit pflanzlicher Stärke, gegenübergestellt.

Als Methodik wurden je 30 g flüssiger Dispersion in einer mit neutralem Pflanzenöl ausgeriebenen Pfanne bei einheitlicher Temperaturführung für 2 Minuten >100°C erhitzt und das Resultat unmittelbar im Anschluss gewogen, um über das Gewicht den Wasserverlust bzw. das Wasserbindevermögen der thermisch gelierten dispersen Systeme, außerdem Vollei im Vergleich, zu bestimmen. Die entsprechenden Messwerte sind in Tabelle 3 aufgeführt.

**Tabelle 3: Gemessener Wasserverlust unterschiedlicher disperser Systeme nach standardisiertem 2-minütigem Erhitzen von 30 g Probenmaterial.**

| Variante | Gewicht nach Erhitzen anteilig Gewicht vor Erhitzen: [%]: | Wasserverlust durch standardisiertes 2-minütiges Erhitzen [%]: |
|---|---|---|
| 4 % Protein in Wasser: | 27 | 73 |
| 4 % Protein in wässrigem Extrakt aus Hülsenfrüchten: | 53 | 47 |
| 12 % Protein in Wasser | 71 | 29 |
| 12 % Protein in wässrigem Extrakt aus Hülsenfrüchten | 83 | 17 |
| 4 % Protein + 8 % Stärke in Wasser | 67 | 33 |
| 4% Protein + 8 % Stärke in wässrigem Extrakt aus Hülsenfrüchten | 70 | 30 |
| Hühnervollei | 87 | 13 |

Unter Verwendung der Erfindung in der Ausführungsform von 4% Kartoffelprotein in Kombination mit wässrigem Extrakt aus Hülsenfrüchten wurde ein um 26 Prozentpunkte tieferer Wasserverlust gemessen als bei der Vergleichsdispersion.

Unter Verwendung von 12% Kartoffelprotein wurde in Kombination mit wässrigem Extrakt aus Hülsenfrüchten ein um 12 Prozentpunkte tieferer Wasserverlust gemessen als bei der Vergleichsdispersion

Unter Verwendung von 4% Kartoffelprotein sowie 8% Stärke wurde in Kombination mit wässrigem Extrakt aus Hülsenfrüchten ein um 3 Prozentpunkte tieferer Wasserverlust gemessen als bei der Vergleichsdispersion.

Dementsprechend ist die Wasserbindung der Erfindung in allen getesteten Varianten höher als bei vergleichbaren Dispersionen aus nur einem der beiden Komponenten der Erfindung. Diese funktionelle Eigenschaft ist beispielsweise für Rührei-Anwendungen relevant.

### Beispiel 6: Anwendungsbeispiel eifreie Quiche

Der heiß-gelierende Effekt der Erfindung wurde in hühnereifreiem Guss für Tartes und Quiche getestet und zeigte einen deutlich stabilisierenden Effekt gegenüber der Vergleichsdispersion (Kombination der Proteinkomponente und Wasser) und stellte eine gute Alternative zum selben Guss unter Verwendung von Hühnervollei dar.

Das sensorisch und hinsichtlich Textur beste Ergebnis wurde durch die Erfindung in der Ausführungsform bestehend aus einer Kombination aus wässrigem Extrakt aus Hülsenfrüchten, Kartoffelprotein und pflanzlicher Stärke erzielt.

Unter anderem, jedoch vor allem in der Anwendung in einer rein pflanzlichen Mini-Käsequiche-Alternative wurde außerdem ein Unterschied hinsichtlich Maillard-Bräunung deutlich, wie nachfolgend dargestellt.

Die Erfindung führte bei identischem Backvorgang zu einer stärkeren Maillard-Bräunung als Vergleichsdispersionen mit jeweils nur einer der Komponenten der Erfindung.

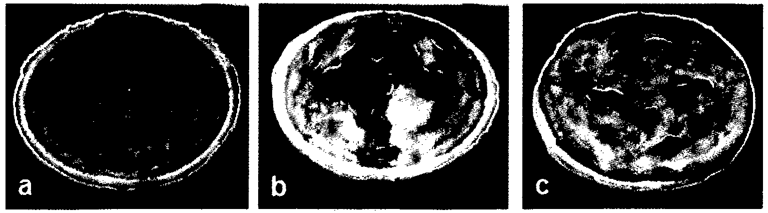

Maillard-Bräunung bei Anwendung unterschiedlicher Ei-Ersatz-Varianten in einer Käsequiche-Alternative bei vergleichbarer Rezeptur und identischem Backvorgang: a) Kartoffelprotein mit Wasser; b) dieselbe Menge Kartoffelprotein mit wässrigem Extrakt aus Hülsenfrüchten statt Wasser; c) dieselbe Menge wässrigem Extrakt aus Hülsenfrüchten ohne Kartoffelprotein bei vergleichbarer Trockensubstanz wie b).

### Beispiel 7: Anwendungsbeispiel Rührkuchen

Die Erfindung wurde in einer einfachen Rezeptur getestet und zeigten einen deutlichen stabilisierenden Effekt gegenüber Vergleichsdispersionen und stellt eine gute Alternative zum selben Kuchen unter Verwendung von Hühnervollei dar.

Die Kuchen wurden von einem Panel bestehend aus drei Experten im Bereich Backwaren blind verkostet und sensorisch bewertet. Hierbei schnitt die Erfindung im Gesamturteil gegenüber den Vergleichsdispersionen und Hühnerei am besten ab und lieferte damit hinsichtlich Geschmack und Textur ein besseres Ergebnis als die übrigen Varianten:
- Ei
- Wasser (Nullvariante)
- wässriges Extrakt aus Hülsenfrüchten
- Wasser + Kartoffelprotein
- wässrigem Extrakt aus Hülsenfrüchten + Kartoffelprotein
- Wasser + Kartoffelprotein + Stärke

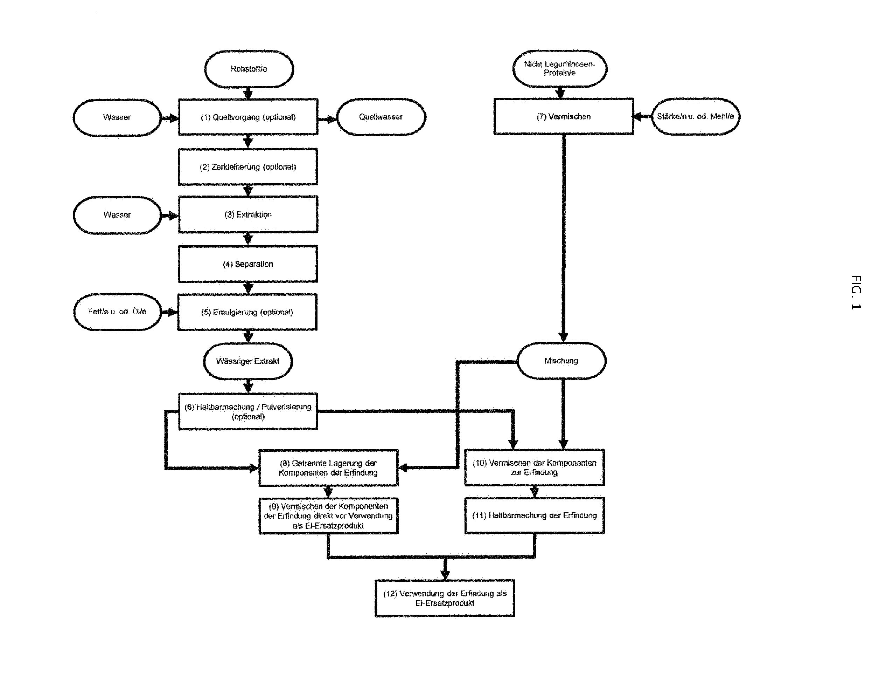

In der Zeichnung ist die Erfindung - teils schematisch - unter Bezugnahme auf eine beispielhafte Verfahrensweise beschrieben.

In einem ersten Verfahrensschritt wird ein Rohstoff oder es werden mehrere Rohstoffe jeweils zur Gewinnung einer wässrig extrahierbaren Fraktion, zum Beispiel aus Leguminosen und/oder Süßgräser, einer Quellvorrichtung 1 zugeführt, wo sie gequollen werden.

Bei der dargestellten Ausführungsform werden als Rohstoffe zum Beispiel getrocknete Erbsen der Quellvorrichtung 1 zugeführt. Das Zuführen kann chargenweise, also diskontinuierlich, beispielsweise über ein nicht dargestelltes Silo oder durch eine fahrbare Dosiervorrichtung erfolgen. Es ist aber auch möglich, der Quellvorrichtung 1 den betreffenden Rohstoff oder die Rohstoffe durch einen motorisch angetriebenen Stetigförderer, zum Beispiel durch ein Transportband, zuzuführen.

Der Rohstoff oder die Rohstoffe, zum Beispiel Erbsen, wurden bei der dargestellten Verfahrensweise im Verhältnis [w/w] 1:2 oder 1:4, bevorzugt 1:3, mit Wasser gemischt, um für eine definierte Zeit, bei der dargestellten Ausführungsform beispielsweise vier Stunden, Wasser zu absorbieren. Im Anschluss daran werden die gequollenen Erbsen oder dergleichen vom überschüssigen, nicht durch den Rohstoff, vorliegend Erbsen, absorbierten Wasser, dem sogenannten Quellwasser, separiert. Das Quellwasser wird anschließend entsorgt.

Bei der dargestellten Verfahrensweise erfolgt anschließend eine Zerkleinerung in einer Zerkleinerungsvorrichtung 2. Bei der dargestellten Verfahrensweise wurde beispielsweise Erbsen und/oder Hafer verwendet, der in der Zerkleinerungsvorrichtung 2 auf 500 Mikrometer zerkleinert wird.

Daran anschließend erfolgt in einer Extraktionsvorrichtung 3 eine Extraktion.

Rohstoffe, zum Beispiel Erbsen und/oder Hafer, werden in einer Quellvorrichtung 1 mit Wasser gemischt, und zwar in einem Verhältnis von 1:1, 1:2 oder 1:3 und anschließend die vorgequollenen Rohstoffe, zum Beispiel Erbsen und/oder Hafer, einer Zerkleinerungsvorrichtung 2 zugeführt, wo die vorgequollenen Rohstoffe zerkleinert werden, was durch motorisch angetriebene Messer, beispielsweise Stephan-Mixer erfolgen kann.

Je nach Ausgangsstoffe, zum Beispiel bei Erbsen und/oder Hafer, werden die zerkleinerten und vorgequollenen Rohstoffe einer Extraktionsvorrichtung 3 zugeführt, wo sie bei einem Druck von 1 bis 1,8 bar extrahiert werden. Die Extraktionsdauer wird je nach eingesetztem Rohstoff abgestimmt und beträgt bei der Verwendung von Erbsen und/oder Hafer zum Beispiel 120 Minuten.

In einer Separationsvorrichtung 4 erfolgt eine Separation von löslichen und unlöslichen Bestandteilen der Rohstoffe, wobei je nach Ausgangsstoff technofunktionelle Eigenschaften wie Bindung, Quellungseigenschaften, Verdickung, Gelierung, wie thermische Gelierung, Wasserhaltevermögen, Stabilisierung, Dispergier- und Suspensierfähigkeit, Fettbindungsvermögen, Emulgierfähigkeit und/oder Schäumungsverhalten, Schaumvolumen, Schaumstabilität verändert werden. Dazu kann beispielsweise eine mechanische, physikalische oder chemische Trennung, wie zum Beispiel Filtrieren oder Dekantieren, angewendet werden. Beim Dekantieren erfolgt dies in einer Zentrifuge.

Bei der dargestellten Ausführungsform werden die als Rohstoff verwendeten Erbsen, Hafer oder dergleichen zuerst in einer Separationsvorrichtung 4 mit einem Filter von 800 Mikrometer und anschließend zum Beispiel in einem zweiten Filter von 300 Mikrometer separiert. Die Separierung führt zu verbesserten technofunktionellen Eigenschaften, beispielsweise bei der dargestellten Verfahrensweise zu erhöhtem Schaumvolumen und erhöhter Schaumstabilität. Bei der Verwendung von Hafer wird mit einem Filter von beispielsweise 200 Mikrometer separiert oder alternativ dekantiert.

Der wässrig extrahierbaren Faktion, zum Beispiel aus Erbsen und/oder Hafer, werden 2 bis 10% Fett oder Öl, beispielsweise Raps-, Sonnenblumen- oder Kürbiskernöl, in einer Emulgierungsvorrichtung 5 zugesetzt und emulgiert.

Die erste Komponente, die ein wässriger Extrakt aus zum Beispiel Erbsen und/oder Hafer ist, wird bei der dargestellten Verfahrensweise in einer Haltbarmachungsvorrichtung 6 einer Trocknung unterzogen. Das kann je nach Rezeptur und verwendeten Rohstoffen variiert werden. Werden - wie bei der dargestellten Ausführungsform - Erbsen als Rohstoff verwendet, kann dieses Haltbarmachen bei 90°C über 30 Minuten durch Pasteurisierung erfolgen. Eine Sterilisierung, oder Haltbarmachung durch Hochdruckpasteurisierung oder Pulverisierung, zum Beispiel durch Sprüh- oder Gefriertrocknung, ist ebenfalls denkbar.

Wie aus der Zeichnung ersichtlich ist, wird die zweite Komponente der dargestellten Ausführungsform mit einem Nicht-Leguminosen-Protein oder einer Fraktion eines Nicht- Leguminosen-Proteins, beispielsweise aus Kartoffeln, je nach gewünschter Verfahrensweise wahlweise zusammen mit einer oder mehreren Stärken und/oder stärkehaltigen Mehlen, zum Beispiel Maisstärke, in einem Verhältnis von 1:1 oder zum Beispiel 1:2, gemischt, was in einer Mischvorrichtung 7 erfolgt.

Die beiden Komponenten, der wässrige Extrakt und die Mischung aus Nicht-Leguminosen-Protein und Stärke, können nun getrennt zu den jeweils vorgegebenen Lagerbedingungen bis zum Verwendungszweck gelagert werden, was in einer Lagerungsvorrichtung 8 geschieht. Im Falle eines pasteurisierten wässrigen Extrakts aus Erbsen beträgt die Lagertemperatur ≤ 4°C, im Falle der Mischung aus Nicht-Leguminosen-Protein und Stärke erfolgt dies zum Beispiel in einer Trockenatmosphäre bei 15 bis 25°C.

Direkt vor dem Einsatz als Ei-Ersatzprodukt werden beide Komponenten vom Verwender im Verhältnis 8:1 oder 7:1 oder 6:1 oder 5:1 oder 4:1 oder 3:1 gemischt, was in einer Mischvorrichtung 9 geschieht. Wie bereits beschrieben, besteht im vorliegenden Beispiel die erste Komponente aus einem wässrigen Extrakt aus Erbsen und/oder Hafer und die zweite Komponente aus einer Mischung aus Nicht-Leguminosen-Protein mit oder ohne Stärke, beispielsweise Kartoffelprotein und/oder Maisstärke.

Bei der dargestellten Verfahrensweise wird das gemischte Produkt als Ei-Ersatz, beispielsweise für die Herstellung einer hühnerei-freien Quiche, verwendet, was bei 12 geschieht.

In der erfindungsgemäßen Verfahrensweise wird ein Produkt hergestellt, welches die beiden vorher beschriebenen Komponenten enthält, also ein wässriges Extrakt und Nicht-Leguminosen-Proteine, wobei der Mischung beispielsweise Stärke zugeführt wird, was aber nicht unbedingt erforderlich ist. Das Mischen geschieht bei 10.

Der Haltbarkeitsmachungsschritt erfolgt in einer Vorrichtung 11, beispielsweise - wie oben beschrieben - durch Hochdruck-Pasteurisation.

Anschließend wird das Produkt als Ei-Ersatz oder als Milchersatz bei 12 verwendet.

Die in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

## Patentansprüche

1. Ei-Ersatzprodukt für Hühnervollei oder Hühnereiklar, **dadurch gekennzeichnet, dass** es eine Trockenmasse enthält von 2 bis 60% (w/w), bevorzugter 5 bis 45% (w/w), bevorzugter 8 bis 40% (w/w), bevorzugter 10 bis 35% (w/w), bevorzugter 12 bis 35% (w/w), bevorzugter 14 bis 32% (w/w), bestehend aus einer verzehrbaren Mischung aus (a) einem wässrigen Heißextrakt aus Leguminosen oder Bestandteile davon, oder einer Kombination daraus, wobei die Zusammensetzung des wässrigen Heißextrakts derjenigen entspricht, die sich bei einer wässrigen Heißextraktion bei bevorzugt 60 bis 120°C, bevorzugt 80 bis 120°C, bevorzugt 90 bis 110°C, bevorzugt 80 bis 110°C, bevorzugt 60 bis 110°C, bevorzugt 60 bis 101°C, bevorzugt 80 bis 101°C, bevorzugt 90 bis 101°C ergibt und der Anteil an Nicht-Protein im wässrigen Heißextrakt oder Fraktion/en davon, bezogen auf die Trockenmasse des wässrigen Heißextrakts, mehr als 20% (w/w), bevorzugt mehr als 30% (w/w), bevorzugter mehr als 40% (w/w), bevorzugter mehr als 50% (w/w), bevorzugter mehr als 60% (w/w), bevorzugter mehr als 70% (w/w) beträgt, und aus (b) nativen Proteinen oder einer Fraktion der nativen Proteine, vorliegend als Proteinkonzentrat, Proteinisolat oder Kombinationen davon, wobei mindestens eines der zugesetzten Proteine thermisch fixierbar ist, bevorzugt bei 50 bis 100°C, bevorzugter bei 55 bis 90°C, aus einer oder mehreren Nicht-Leguminosen, wobei es sich bei der/den Nicht-Leguminosen um mindestens einen Rohstoff oder Kombinationen mehrerer Rohstoffen aus Wurzeln oder Knollen handelt, insbesondere Kartoffeln, wobei das Verhältnis des Gewichts der Trockenmasse des/der zugesetzten Proteins/Proteine zum Gewicht der Trockenmasse des eingesetzten Heißextrakts 0.05 bis 5, bevorzugter 0.08 bis 4.5, bevorzugter 0.09 bis 4, bevorzugter 0.1 bis 3.5, bevorzugter 0.1 bis 3, bevorzugter 0.1 bis 2.5, bevorzugter 0.1 bis 2, bevorzugter 0.1 bis 1.75, am bevorzugtesten 0.15 bis 1.5, beträgt.

2. Ei-Ersatzprodukt nach Anspruch 1, **dadurch gekennzeichnet, dass** der wässrige Heißextrakt ein Aquafaba oder Teile davon, basierend auf Erbsen, Kichererbsen, Gelberbsen, Bohnen, Soja, Ackerbohnen, Mungobohnen, Linsen oder Lupinen, oder Kombinationen davon, oder Teilen davon, ist.

3. Ei-Ersatzprodukt nach Anspruch 1 oder 2, **dadurch gekennzeichnet, dass** mindestens eine Stärke oder ein Mehl oder einer Kombination daraus zugesetzt ist, wobei es sich bei der/dem/den zugesetzte/n Stärke/n oder Mehl/Mehlen um ein oder mehrere Erzeugnis/Erzeugnisse aus Pseudo-Getreide, Süßgräsern, Gemüse, Leguminosen, Knollen, Wurzeln, Rosenartigen oder Nüssen bevorzugt aus Hirse, Hafer, Raps, Dinkel, Buchweizen, Amaranth, Zuckerrüben, Erbse, Gelberbse, Bohne, Soja, Cassava, Süßkartoffeln, Yam, Sago, Taro, Kudzu, Hanf, Haselnuss, am bevorzugtesten aus Mais, Weizen, Dinkel, Reis, Kichererbse, Ackerbohne, Mungobohne, Linse, Lupine, Kartoffel, Maniok, Pfeilwurz, Lein, Psyllium, Mandel, Cashewnuss, oder um eine Kombination davon handelt.

4. Ei-Ersatzprodukt nach Anspruch 1 oder einem oder mehreren der darauffolgenden Ansprüche, **dadurch gekennzeichnet, dass** in einer aufgeschäumten Produktausführung die Drainagestabilität, definiert als die benötigte Zeit, nach der 50% des anfänglich im Schaum gebundenen Fluids aus dem Schaum abgeschieden ist, um mindestens 40%, bevorzugt um mindestens 60%, am bevorzugtesten um mindestens 100% verlängert ist im Vergleich zur Stabilität eines Schaumes, der unter Verwendung einer einzelnen Komponente der Erfindung mit Wasser hergestellt wurde.

5. Ei-Ersatzprodukt nach Anspruch 1 oder einem oder mehreren der darauffolgenden Ansprüche, **dadurch gekennzeichnet, dass** die Wasserbindung des gelierten Produkts, definiert als prozentual ausgedrückter Wasserverlust bezogen auf das Ausgangsgewicht nach einheitlicher Temperaturführung für 2 Minuten >100°C, um mindestens 20%, bevorzugt mindestens 30%, bevorzugter mindestens 40%, noch bevorzugter mindestens 50%, am bevorzugtesten mindestens 60%, verbessert ist im Vergleich zur Wasserbindung eines vergleichbaren Gels basierend auf dem/der in der Mischung verwendeten Proteins/Proteine in Wasser.

6. Ei-Ersatzprodukt nach Anspruch 1 oder einem oder mehreren der darauffolgenden Ansprüche, **dadurch gekennzeichnet, dass** quellfähige Hydrokolloide wie Psyllium, Leinsamen, Guar, Johannisbrot, Pentosane, Agar, Pektin, Gellan oder andere, biotechnologisch oder fermentativ hergestellte, Stoffe zugesetzt sind mit einem Anteil von 0.1-5% [w/w], bevorzugter 0.3-4% [w/w], noch bevorzugter 0.5-3% [w/w], bezogen auf das wässrige Produkt, oder dem Nahrungsfasern zugesetzt sind mit einem Anteil von 0.1 bis 10% [w/w], bevorzugt 0.1 bis 5% [w/w], bevorzugt 0.1 bis 4% [w/w], bevorzugt 0.5 bis 4% [w/w], bevorzugt 0.5 bis 3% [w/w] bezogen auf das wässrige Produkt, wobei die Nahrungsfasern bevorzugt aus Weizen, Roggen, Hafer, Mais, Erbse, Bohne, Kartoffel, Flachs, Akazie, Inulin, Karotte, Apfel stammen.

7. Ei-Ersatzprodukt nach Anspruch 1 oder einem oder mehreren der darauffolgenden Ansprüche, **dadurch gekennzeichnet, dass** der Anteil an Protein in der Trockenmasse 20 bis 80% (w/w), bevorzugt 30 bis 70% (w/w), bevorzugter 20 bis 60% [w/w], beträgt.

8. Ei-Ersatzprodukt nach Anspruch 1 oder einem oder mehreren der darauffolgenden Ansprüche, **dadurch gekennzeichnet, dass** das Produkt, bezogen auf die Trockenmasse, 10 bis 80% [w/w], bevorzugt 20 bis 80% [w/w], bevorzugt 30 bis 70% [w/w], bevorzugt 30 bis 60% [w/w], bevorzugt 40 bis 60% [w/w], eine oder mehrere zugesetzte Stärken oder ein oder mehrere zugesetzte Mehle, oder eine Kombination daraus, enthält.

9. Ei-Ersatzprodukt nach Anspruch 1 oder einem oder mehreren der darauffolgenden Ansprüche, **dadurch gekennzeichnet, dass** dem Ei-Ersatzprodukt und/oder dem wässrigen Heißextrakt Fett und/oder Öl zugesetzt ist und bis zu 80% (w/w), bevorzugter bis zu 65% (w/w), bevorzugter bis zu 60% (w/w), bevorzugter bis zu 55% (w/w), bevorzugter bis zu 50% (w/w), bevorzugter bis zu 44% (w/w), bevorzugter bis zu 40% (w/w) der Trockenmasse beträgt.

10. Ei-Ersatzprodukt nach Anspruch 1 oder einem oder mehreren der darauffolgenden Ansprüche, **dadurch gekennzeichnet, dass** das Ei-Ersatzprodukt thermisch verfestigt, wobei der Temperaturbereich 50°C bis 121°C, 55°C bis 100°C, bevorzugter 58°C bis 99°C, bevorzugter 60°C bis 90°C, am bevorzugtesten 60 bis 85°C, beträgt.

11. Ei-Ersatzprodukt nach Anspruch 1 oder einem oder mehreren der darauffolgenden Ansprüche, **dadurch gekennzeichnet, dass** dem Produkt Leguminosenprotein oder Leguminosenmehl oder eine Kombination daraus zugesetzt ist und der Proteinanteil daraus, bezogen auf den gesamten Proteinanteil des Ei-Ersatzprodukts, in der Trockenmasse höchstens 90% (w/w), bevorzugt höchstens 80% (w/w), bevorzugt höchstens 70% (w/w), bevorzugt höchstens 60% (w/w), bevorzugt höchstens 50% (w/w), bevorzugt höchstens 40% (w/w), bevorzugt höchstens 35% (w/w) bevorzugt höchstens 25% (w/w), bevorzugt höchstens 15% (w/w), beträgt.

12. Ei-Ersatzprodukt nach Anspruch 1 oder einem oder mehreren der darauffolgenden Ansprüche, **dadurch gekennzeichnet, dass** das Produkt vor Verwendung aus zwei getrennt voneinander gelagerten Komponenten besteht, wobei mindestens eine Komponente dehydriert vorliegt.

13. Ei-Ersatzprodukt, nach Anspruch 1 oder einem oder mehreren der darauffolgenden Ansprüche, **dadurch gekennzeichnet, dass** das Produkt dehydriert vorliegt.

14. Ei-Ersatzprodukt nach Anspruch 1 oder einem oder mehreren der darauffolgenden Ansprüche, **dadurch gekennzeichnet, dass** es sich statt um einen wässrigen Heißextrakt aus Leguminosen, um einen wässrigen Heißextrakt aus Getreiden, Süßgräsern, Pseudo-Getreiden, Hanfgewächsen, Nüssen, Speisepilzen, oder Reis, Hafer, Weizen, Dinkel, Buchweizen, Amaranth, Hanf, Mandeln, Haselnüssen, Cashewnüssen, Champignons, oder Bestandteile davon, oder Kombinationen daraus, handelt.

15. Ei-Ersatzprodukt nach Anspruch 1 oder einem oder mehreren der darauffolgenden Ansprüche, **dadurch gekennzeichnet, dass** es sich statt der/den Nicht-Leguminosen um native Proteinen oder einer Fraktion der nativen Proteine, vorliegend als Proteinkonzentrat, Proteinisolat oder Kombinationen davon, aus einer oder mehreren Nicht-Leguminosen wobei es sich bei der/den Nicht-Leguminosen um mindestens einen pflanzlichen oder mikrobiellen Rohstoff oder Kombinationen daraus, aus Pseudo-Getreide, Süßgräser, Hanfgewächse, Nüsse, Rotalge, Grünalge, Blaualge, Wurzeln, Knollen, Zuckerrüben, Weizen, Mais, Hirse, Reis, Hafer, Raps, Lein, Hanf, Erdnüssen, Haselnüssen, Mandeln, Cashews, Purpurtang, Chlorella oder Spirulina, Maniok, Cassava, Süßkartoffeln, Yam, Sago, Taro oder Kartoffeln handelt.

16. Ei-Ersatzprodukt nach Anspruch 1 oder einem der mehreren der darauffolgenden Ansprüche, **dadurch gekennzeichnet, dass** das Produkt in einer wässrigen Ausführungsform über 60 Minuten, bevorzugt über 30 Minuten, am bevorzugtesten über 10 Minuten, sedimentationsstabil ist.

17. Verfahren zur Herstellung eines Ei-Ersatzprodukt für Hühnervollei oder Hühnereiklar nach Anspruch 1 und einem oder mehreren der Ansprüche 2 bis 16, **dadurch gekennzeichnet, dass** ein wässriger Heißextrakt mit einem oder mehreren Nicht-Leguminosenproteinen gemischt und diese Mischung einem Haltbarmachungsverfahren unterzogen wird, wobei die wässrige Heißextraktion bei 60 bis 120°C, bevorzugt 80 bis 120°C, bevorzugt 90 bis 110°C, bevorzugt 80 bis 110°C, bevorzugt 60 bis 110°C, bevorzugt 60 bis 101°C, bevorzugt 80 bis 101°C, bevorzugt 90 bis 101°C ausgeführt wird, derart, dass der Anteil an Nicht-Protein im wässrigen Heißextrakt oder Fraktion/en davon, bezogen auf die Trockenmasse des wässrigen Heißextrakts mehr als 20% (w/w), bevorzugt mehr als 30% (w/w), bevorzugter mehr als 40% (w/w), bevorzugter mehr als 50% (w/w), bevorzugter mehr als 60% (w/w), bevorzugter mehr als 70% (w/w) beträgt.

18. Verfahren nach Anspruch 17, **dadurch gekennzeichnet, dass** der Anteil an Bestandteilen über 500 Da, bevorzugter über 1 kDa, bevorzugter über 2 kDa, bevorzugter über 5 kDa, bevorzugter über 10 kDa, bevorzugter über 20 kDa, bevorzugter über 30 kDa mindestens 2% (w/w), bevorzugter mindestens 5% (w/w), bevorzugter mindestens 10% (w/w), bevorzugter mindestens 20% (w/w), bevorzugter mindestens 30% (w/w), bevorzugter mindestens 40% (w/w), bevorzugter mindestens 50% (w/w), bevorzugter mindestens 60% (w/w), bevorzugter mindestens 70% (w/w), bevorzugter mindestens 80% (w/w), bezogen auf die Trockenmasse, im wässrigen Heißextrakt beträgt.

19. Verwendung des Ei-Ersatzprodukts, nach Anspruch 1 oder einem oder mehreren der darauffolgenden Ansprüche, **dadurch gekennzeichnet, dass** das Produkt in Schäumen oder gashaltigen, hühnereifreien oder hühnereireduzierten Koch- oder Backprodukten Verwendung findet, bevorzugt Meringues, Makronen, Macarons, Kuchen, Muffins, Biskuit, Brioche, veganem Eischnee, Marshmallows, Schokoküssen oder vergleichbaren Produkten, vorzugsweise thermisch oder mechanisch oder in einer Kombination daraus erzeugt und vorzugsweise thermisch oder durch mechanisch induzierte Gelierung oder einer Kombination daraus fixiert ist, oder als Gelbildner oder Bindemittel oder einer Kombination daraus in hühnereifreien oder hühnereireduzierten Koch- oder Backprodukten, bevorzugt Rührei, Omelett, Quiche, Tartes, Aufläufen, Teigwaren, Panaden, Soßen, Cremes, Puddings, Tiramisu, Desserts, Curd, Pancakes, Kuchen, Biskuit, Muffins oder vergleichbaren Produkten Verwendung findet.
